(19) Europäisches Patentamt
European Patent Office
Office européen des brevets

(11) **EP 4 028 793 B1**

(12) **EUROPÄISCHE PATENTSCHRIFT**

(45) Veröffentlichungstag und Bekanntmachung des Hinweises auf die Patenterteilung:
**28.06.2023 Patentblatt 2023/26**

(21) Anmeldenummer: **20771511.1**

(22) Anmeldetag: **08.09.2020**

(51) Internationale Patentklassifikation (IPC):
*G01S 17/18* (2020.01)  *G01S 17/88* (2006.01)
*G01S 7/48* (2006.01)  *G01S 7/481* (2006.01)
*G01S 7/4865* (2020.01)  *G01J 3/02* (2006.01)
*G01N 21/01* (2006.01)  *G01J 3/10* (2006.01)
*G01J 3/12* (2006.01)  *G01J 3/28* (2006.01)
*G01J 3/44* (2006.01)  *G01N 21/47* (2006.01)
*G01N 21/53* (2006.01)  *G01N 21/64* (2006.01)
*G01N 21/65* (2006.01)  *G01N 21/17* (2006.01)
*G01N 21/27* (2006.01)

(52) Gemeinsame Patentklassifikation (CPC):
**G01S 17/18; G01J 3/0208; G01J 3/021;**
**G01J 3/0218; G01J 3/0297; G01J 3/10;**
**G01J 3/1256; G01J 3/2889; G01J 3/4412;**
**G01N 21/274; G01N 21/4785; G01N 21/53;**
**G01N 21/645; G01N 21/65; G01S 7/4802;** (Forts.)

(86) Internationale Anmeldenummer:
**PCT/EP2020/075097**

(87) Internationale Veröffentlichungsnummer:
**WO 2021/048138 (18.03.2021 Gazette 2021/11)**

(54) **DETEKTORVORRICHTUNG UND VERFAHREN ZUR FERNANALYSE VON STOFFEN SOWIE MOBILES SENSORSYSTEM**

DETECTOR DEVICE AND METHOD FOR THE REMOTE ANALYSIS OF MATERIALS, AND MOBILE SENSOR SYSTEM

DISPOSITIF DE DÉTECTION ET PROCÉDÉ POUR L'ANALYSE À DISTANCE DE MATÉRIAUX, ET SYSTÈME DE CAPTEUR MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.09.2019 DE 102019124547**

(43) Veröffentlichungstag der Anmeldung:
**20.07.2022 Patentblatt 2022/29**

(73) Patentinhaber: **Deutsches Zentrum für Luft- und Raumfahrt e.V.**
**51147 Köln (DE)**

(72) Erfinder:
• **KÖLBL, Christoph**
**74861 Neudenau (DE)**
• **DUSCHEK, Frank**
**97953 Königheim (DE)**

(74) Vertreter: **RPK Patentanwälte**
**Reinhardt und Kaufmann**
**Partnerschaft mbB**
**Gaisburgstrasse 21**
**70182 Stuttgart (DE)**

(56) Entgegenhaltungen:
**DE-A1-102016 121 517    DE-A1-102018 129 807**
**US-A1- 2016 334 507**

• SUDHAKAR P ET AL: "Laser radar signal processing for measurement of chemical and biological agents", 2017 4TH INTERNATIONAL CONFERENCE ON ADVANCED COMPUTING AND COMMUNICATION SYSTEMS (ICACCS), IEEE, 6. Januar 2017 (2017-01-06), Seiten 1-6, XP033144761, DOI: 10.1109/ICACCS.2017.8014689 [gefunden am 2017-08-22]

(52) Gemeinsame Patentklassifikation (CPC): (Forts.)
**G01S 7/4812; G01S 7/4813; G01S 7/4865; G01S 17/88;** G01J 2003/1247; G01N 2021/1793; G01N 2021/4709; G01N 2021/6417; G01N 2021/6463

## Beschreibung

### Stand der Technik

Die Erfindung betrifft eine Detektorvorrichtung zur Fernanalyse von Stoffen, insbesondere Gefahrstoffen, und ein mobiles Sensorsystem mit einer Detektorvorrichtung sowie ein Verfahren zur Fernanalyse von Stoffen, insbesondere Gefahrstoffen.

Zur kontaktlosen Messung von Gefahrstoffen über große Distanzen von mehreren Metern bis Kilometer kommen unter anderem laserbasierte Technologien, wie LIDAR (Light Detection And Ranging) oder Stand-Off-Detektionssysteme, zum Einsatz. LIDAR-Systeme werden in diesem Zusammenhang hauptsächlich zum Aufspüren von Aerosolen in der Atmosphäre verwendet, um physikalische Zustandsparameter ortsaufgelöst mit einer hohen Sensitivität bestimmen zu können. Zwar gibt es auch selektiv empfindliche Systeme, wie beispielsweise Raman-LIDAR oder Differentielles Absorptions-LIDAR, der Einsatz solcher Systeme beschränkt sich aufgrund der eingesetzten Laserwellenlängen und Laserpulsenergien sowie der Systemgröße meist auf Atmosphärenmessungen.

Im Gegensatz dazu werden bei der so genannten Stand-Off-Detektion freigesetzte feste oder flüssige chemische oder biologische Stoffe/Gefahrstoffe, beispielsweise auf Oberflächen, detektiert. Auch hierfür kommen laserbasierte Systeme zum Einsatz, welche auf der Raman-Spektroskopie basieren. Der Vorteil dieser Technik liegt darin, dass eine hohe Selektivität erzielt werden kann, weil diese auf der Anregung unterschiedlicher Molekülschwingungen basiert. Für ein ausreichend großes Signal-zu-Rausch-Verhältnis sind allerdings lange Messzeiten im Sekundenbereich, hohe Laserleistungen und/oder entsprechend große Empfangsoptiken notwendig. Unter Laborbedingungen stellen diese Aspekte kein Problem dar. Unter realen Bedingungen werden die Randbedingungen dagegen durch das Szenario festgelegt. Aktuelle Raman-Systeme eignen sich deshalb nur sehr begrenzt zur Detektion von Gefahrstoffen. Beispielsweise sind die Messzeiten aktuell zu lange, um eine Gefahrstoffdetektion an Objekten, die sich mit hoher Geschwindigkeit am Detektionssystem vorbeibewegen, durchzuführen.

Aus der DE 10 2016 121 517 A1 ist eine Detektionsvorrichtung bekannt, welche eine optische Erfassungseinrichtung und eine Untersuchungseinrichtung umfasst, wobei die optische Erfassungseinrichtung mindestens eine Kamera aufweist, welche einen vorgegebenen Erfassungsbereich eines zu untersuchenden beweglichen Objekts innerhalb eines definierten räumlichen Kontrollbereichs optisch erkennt. Die Untersuchungseinrichtung umfasst eine Spektroskopieeinrichtung zur spektroskopischen Untersuchung des Erfassungsbereichs. Die Untersuchungseinrichtung weist eine Nachführungseinrichtung auf, mittels welcher die Spektroskopieeinrichtung eine Position des Erfassungsbereichs des beweglichen Objekts räumlich verfolgt. Die Untersuchungseinrichtung weist weiter eine Auswertungseinrichtung auf, welche durch die Spektroskopieeinrichtung aufgenommene Daten auswertet. Mittels der spektroskopischen Untersuchung können chemische Stoffe detektiert werden, welche sich auf einer Oberfläche des Erfassungsbereichs des beweglichen Objekts befinden.

Aus der US 20160334507 A1 ist eine Lasersystem mit einem kontinuierlich ausgesendeten Laserstrahl bekannt, das zur Fernanalyse von Stoffen dient.

Aus der Veröffentlichung von Sudhakar P. et al: "Laser radar signal processing for measurement of chemical and biological agents", 2017, 4th International Conference on Advanced Computing and Communication Systems (ICACCS), IEEE, 6. Januar 2017 (2017-01-06), Seiten 1-6, XP033144761, DOI: 10.1109/ICACCS.2017.8014689 ist ein Lasersystem zur Fernanalyse von Stoffen bekannt, das mit Laserpulsen arbeitet.

### Offenbarung der Erfindung

Die Aufgabe der Erfindung ist es, eine Detektorvorrichtung zur Fernanalyse von Stoffen zu schaffen, welche kurze Messzeiten bei geringer Störanfälligkeit ermöglicht.

Eine weitere Aufgabe ist es, ein mobiles Sensorsystem mit einer Detektorvorrichtung zu schaffen, welche kurze Messzeiten bei geringer Störanfälligkeit ermöglicht.

Eine weitere Aufgabe ist es, ein Verfahren zur Fernanalyse von Stoffen mit einer solchen Detektorvorrichtung anzugeben.

Die Aufgaben werden durch die Merkmale der unabhängigen Ansprüche gelöst. Günstige Ausgestaltungen und Vorteile der Erfindung ergeben sich aus den weiteren Ansprüchen, der Beschreibung und der Zeichnung.

Es wird eine Detektorvorrichtung zur Fernanalyse von Stoffen, insbesondere Gefahrstoffen, vorgeschlagen, umfassend wenigstens einen Laser, welcher zum Einstrahlen von gepulstem Laserlicht auf eine in einer Detektionsentfernung befindlichen Probe ausgebildet ist, und ein Teleskop, welches zum Sammeln und/oder Fokussieren von an der Probe gestreutem Laserlicht sowie zum Weiterleiten des gestreuten Laserlichts in ein optisches Spektrometer ausgebildet ist.

Das optische Spektrometer ist zur spektralen Analyse des an der Probe gestreuten Laserlichts ausgebildet. Auf den Laser folgen ein erster Strahlengang mit einem ersten Referenzstrahl und ein weiterer Strahlengang mit einem zweiten Referenzstrahl für das gestreute Laserlicht. Es ist eine Einheit zur Bestimmung einer Zeitdifferenz zwischen Pulsen des ersten Referenzstrahls und Pulsen des zweiten Referenzstrahls vorgesehen, wobei aus der Zeitdifferenz die Detektionsentfernung bestimmbar ist. Die Einheit ist zur Bestimmung der Detektionsentfernung in Echtzeit aus der Zeitdifferenz ausgebildet.

Eine Detektorvorrichtung zur Ferndetektion von Gefahrstoffen mittels Raman-Streuung nach dem Stand der Technik umfasst üblicherweise eine schmalbandige CW-Laserquelle, seltener auch eine gepulste Laserquelle mit niedriger Repetitionsrate, welche Laserstrahlung im UV, VIS oder NIR-Bereich emittiert. Mit einer Strahlanpassungseinheit wird die Lasermode üblicherweise entsprechend den Anforderungen der Messung modifiziert. Über einen Auskoppelspiegel wird die Laserstrahlung auf die Probe gelenkt. Die von der Probe elastisch und inelastisch gestreuten Photonen werden über ein Empfangsteleskop gesammelt und gebündelt und durchlaufen anschließend eine weitere Einheit zur Strahlanpassung, wie beispielsweise eine Lichtleitfaser, um das gestreute Laserlicht in ein Spektrometer einzukoppeln. Dort wird das Laserlicht über ein dispersives oder diffraktives Element spektral zerlegt und analysiert.

Demgegenüber weist die erfindungsgemäße Detektorvorrichtung ein erweitertes Detektionssystem auf. Durch die Einführung von einer Einheit zur Bestimmung der Zeitdifferenz, beispielsweise einer Referenzeinheit, welche die Signale von zwei Referenzstrahlen verarbeitet, ergeben sich im Vergleich zum Stand der Technik mehrere wesentliche Vorteile.

Vorteilhaft kann das System kompakt ausgebildet sein und mit kurzer Messzeit und mit hoher Empfindlichkeit die Probe vermessen.

Die Detektionsentfernung kann in Echtzeit über die Referenzstrahlen ohne ein zusätzliches LIDAR-System bestimmt werden. Dies stellt gerade im mobilen Einsatz, bei dem sich die Entfernung zwischen Detektorvorrichtung und Probe verändern kann und diese nicht direkt gemessen werden kann, einen erheblichen Vorteil dar.

Im Strahlengang des ausgesendeten Laserlichts ist ein erster Auskoppelspiegel zum Auskoppeln eines ersten Referenzstrahls in einen ersten Detektor und im Strahlengang des gestreuten Laserlichts ein zweiter Auskoppelspiegel zum Auskoppeln eines zweiten Referenzstrahls in einen zweiten Detektor vorgesehen, mittels dessen von der Probe elastisch gestreutes Laserlicht von inelastisch gestreutem Raman-Licht und Fluoreszenz-Licht getrennt in den Strahlengang des zweiten Referenzstrahls auskoppelbar ist.

Der Zeitpunkt des Eintreffens des elastisch gestreuten Laserlichts auf den zweiten Detektor dient gleichzeitig als variabler Trigger für den Start der spektralen Analyse im Spektrometer.

Damit ist eine automatisierte, von der Detektionsentfernung abhängige, variable Einstellung eines Triggerpunkts bei einer Detektion mit einem Gating-Fenster möglich. Damit ist es möglich, auch nur ein Messfenster zu analysieren, in dem eine entsprechende Information erwartet wird.

Störstrahlung, beispielsweise durch Sonnenlicht oder eine Beleuchtung, welche als Offset zum Signal beitragen kann und damit den nutzbaren Dynamikbereich des Detektors verkleinert, kann effizient unterdrückt werden.

Die Detektorvorrichtung ermöglicht geringere Detektionszeiten bei gesteigertem Signal-zu-Rausch-Verhältnis im Vergleich zum Stand der Technik.

Mit der erfindungsgemäßen Detektorvorrichtung lassen sich die wichtigsten einzelnen Detektionsparameter, wie Messzeit, Laserpulsenergie, Größe der Detektionsoptik, Signal-Rausch-Verhältnis, entscheidend verbessern. Damit wird der Aufbau eines Raman-Systems für ein reales Szenario ermöglicht. Die Messzeit kann möglichst kurz gehalten werden, beispielsweise zur Detektion von bewegten Objekten.

Es reicht, eine geringe Laserpulsenergie zu verwenden, um die Sicherheit für beteiligte Personen zu gewährleisten. Die Detektionsoptik kann räumlich klein ausgeführt werden, was einen Einfluss auf die Größe des Systems hat. Das alles lässt sich bei gleichzeitig möglichst hohem Signal-Rausch-Verhältnis erzielen, was für die Empfindlichkeit des Systems von Bedeutung ist.

Die Detektorvorrichtung eignet sich vorteilhaft für eine Gefahrstoffdetektion mit schneller Beurteilung der Gefahrensituation. In realen Szenarien tritt regelmäßig der Fall auf, dass ausgetretene Substanzen nicht bekannt sind und das Gefahrenpotential zunächst nur abgeschätzt werden kann. Mit der erfindungsgemäßen Detektorvorrichtung ist man in der Lage, sehr schnell erste Informationen zur Beurteilung der Gefahr bereitzustellen. Weiter lässt sich das Ausmaß einer Kontamination leicht bestimmen. Mit einem klassischen Punktdetektor nach dem Stand der Technik muss die Probenstelle quasi Punkt für Punkt abgetastet werden. Bei Messzeiten größer 1s dauert dies entsprechend lange. Die Messzeiten bei dem vorliegenden System sind wesentlich kürzer, sodass auch die Ausbreitung erfasst werden kann. Dies kann aufgrund der Stand-Off-Konfiguration sogar berührungslos erfolgen.

Nach einer günstigen Ausgestaltung der Detektorvorrichtung kann die Einheit, beispielsweise die Referenzeinheit, für eine Leistungskalibrierung bei jedem emittierten Laserpuls und/oder bei einer multispektralen Anregung eine Intensitätskalibrierung bei mehreren Laserwellenlängen ausgebildet sein.

Nach einer vorteilhaften Ausgestaltung der Detektorvorrichtung kann der zweite Auskoppelspiegel als dichroitischer Strahlteiler ausgebildet sein, mittels dessen von der Probe elastisch gestreutes Laserlicht von inelastisch gestreutem Raman-Licht und Fluoreszenz-Licht getrennt in den Strahlengang des zweiten Referenzstrahls auskoppelbar ist. Der Zeitpunkt des Eintreffens des elastisch gestreuten Laserlichts auf den zweiten Detektor dient gleichzeitig als variabler Trigger für den Start der spektralen Analyse im Spektrometer. Der Vorteil dieser Anordnung ist, dass sich der Triggerzeitpunkt für die Analyse im Spektrometer automatisch zeitlich entsprechend der Änderung des Abstands zwischen Detektorvorrichtung und Probe verschieben kann.

Nach einer vorteilhaften Ausgestaltung der Detektorvorrichtung kann der Laser mit einer Wellenlänge von höchstens 400 nm und/oder einer Pulswiederholrate im Bereich von 1 kHz bis 10 MHz, insbesondere bis 1 MHz und/oder einer Pulsbreite höchstens 10 ns ausgebildet sein. Je höher die Pulswiederholrate ist, desto schneller kann das Spektrum erfasst werden. Damit können auch bewegte Objekte detektiert werden. Die Pulsbreite liegt typischerweise im Nanosekundenbereich. Damit der Abstand zur Probe zuverlässig bestimmt werden kann, sollte der Laserpuls möglichst eine steil ansteigende Flanke aufweisen.

Nach einer vorteilhaften Ausgestaltung der Detektorvorrichtung kann im Strahlengang des ersten Referenzstrahls eine erste Anpassungsoptik, insbesondere mit einem Bandpassfilter, vorgesehen sein. Damit können mit einer geeigneten Optikeinheit eventuell störende Signale, welche nicht vom Laser stammen, beispielsweise mittels Bandpassfilter um die Zentralwellenlänge des Lasers unterdrückt werden. Das gefilterte Laserlicht kann dann auf eine schnelle Fotodiode als erstem Detektor fokussiert werden.

Nach einer vorteilhaften Ausgestaltung der Detektorvorrichtung kann im Strahlengang des zweiten Referenzstrahls eine zweite Anpassungsoptik, insbesondere mit einem Bandpassfilter und/oder einer Fokussiereinheit, vorgesehen sein. Mit Hilfe der zweiten Anpassungsoptik, welche einen Bandpass-Filter um die zentrale Wellenlänge des Lasers und eine Linse umfassen kann, kann das spektral gesäuberte, rückgestreute Laserlicht auf eine zweite schnelle Fotodiode als zweitem Detektor fokussiert werden.

Nach einer vorteilhaften Ausgestaltung der Detektorvorrichtung kann das Spektrometer wenigstens ein Filtermodul, einen Detektor und eine Messeinheit aufweisen. Mittels des Filtermoduls kann das gestreute Laserlicht für die spektrale Zerlegung aufbereitet werden, sodass es in dem Detektor mit großer Empfindlichkeit detektierbar ist. Die Messeinheit dient zum Auslesen des Detektors und Umwandlung des analogen Messsignals in ein digitales Signal.

Nach einer vorteilhaften Ausgestaltung der Detektorvorrichtung kann das Filtermodul als ein durchstimmbares Filter, und/oder der Detektor als ein Punktsensor oder ein abbildender Sensor, und/oder die Messeinheit mit einer Boxcar-Mittelung von Messwerten ausgebildet sein.

Mittels eines durchstimmbaren Filters, dessen Filterkurve über das Spektrum geschoben werden kann, können Signale mit hoher Empfindlichkeit bestimmt werden. Punktsensoren können als sehr empfindliche, schnelle Detektoren eingesetzt werden. Abbildende Sensoren erlauben dagegen eine räumliche Erfassung der Probenumgebung. Eine Boxcar-Mittelung kann vorteilhaft zum Unterdrücken störender Hintergrundstrahlung eingesetzt werden.

Nach einer vorteilhaften Ausgestaltung der Detektorvorrichtung kann im Strahlengang des Laserlichts vor einer Auskoppelung auf die Probe über einen dritten Auskoppelspiegel eine Strahlanpassungseinheit vorgesehen sein. In der Strahlanpassungseinheit können beispielsweise ein Strahldurchmesser und/oder eine Divergenz des Laserlichts an die gewünschte Messaufgabe und/oder die Detektionsentfernung angepasst werden.

Nach einer vorteilhaften Ausgestaltung der Detektorvorrichtung kann im Strahlengang des gestreuten Laserlichts nach dem Teleskop eine Strahlanpassungseinheit, insbesondere mit einer Filtereinheit vorgesehen sein. Die Strahlanpassungseinheit kann beispielsweise die Einkopplung in eine optische Faser auf Grund der räumlichen Trennung von Teleskop und Detektionsoptik umfassen. In der Filtereinheit kann das rückgestreute Laserlicht für die Detektion geeignet konditioniert und von störendem Hintergrund befreit werden.

Nach einer vorteilhaften Ausgestaltung der Detektorvorrichtung kann das Teleskop mit einer Autofokuseinheit ausgebildet sein. Insbesondere kann die Autofokuseinheit über die Bestimmung der Detektionsentfernung steuerbar sein. Durch Nutzung einer Autofokuseinheit zur Teleskopsteuerung kann eine günstige Kopplungseffizienz bei der Abbildung des gestreuten Laserlichts vom Teleskop auf die folgende Strahlanpassungseinheit erreicht werden.

Nach einer vorteilhaften Ausgestaltung der Detektorvorrichtung kann eine Referenzeinheit zur Verarbeitung von Signalen des ersten und des zweiten Detektors ausgebildet sein, mittels welcher eine Steuerung der Messeinheit, und/oder des Filtermoduls, und/oder der Autofokuseinheit bewirkbar ist.

Die Referenzeinheit bestimmt eine Signallaufzeit der Laserpulse und entsprechende Triggerzeitpunkte. Damit können die Messeinheit und/oder das Filtermodul und/oder die Autofokuseinheit auf geeignete Weise Signale zur Steuerung erhalten.

Nach einer vorteilhaften Ausgestaltung der Detektorvorrichtung kann eine Steuereinheit vorgesehen sein, über welche ein Aussenden einzelner Laserpulse steuerbar ist. Die Steuereinheit kann über eine Eingabe an einem mit ihr verbundenen Computer geeignet getriggert werden und damit der Start einer Messung initiiert werden. Weiter lässt sich damit das Aussenden einzelner Laserpulse für bestimmte Messaufgaben auslösen.

Es wird ein mobiles Sensorsystem zur Fernanalyse von Stoffen, insbesondere Gefahrstoffen, vorgeschlagen, umfassend ein unbemanntes Bodenfahrzeug oder Luftfahrzeug, insbesondere eine Drohne, mit einer Detektorvorrichtung. Die Detektorvorrichtung ist dabei in einem Gehäuse angeordnet, welches mit dem Bodenfahrzeug oder Luftfahrzeug verbunden, insbesondere abnehmbar verbunden ist.

Das mobile Sensorsystem realisiert in vorteilhafter Weise eine Integration der Detektorvorrichtung zur Fernanalyse von Stoffen, insbesondere Gefahrstoffen, in ein unbemanntes Bodenfahrzeug oder Luftfahrzeug, insbesondere eine Drohne, welche autonom oder von einem entfernten Benutzer gesteuert werden können.

Mit einem solchen mobilen Sensorsystem kann eine Detektion insbesondere von Gefahrstoffen aus einer räumlichen Entfernung durchgeführt werden, ohne dass Personen gefährdet werden.

Damit können beispielsweise Inspektionen von Gebäuden, Ausrüstung, Fahrzeugen, Luftfahrzeugen und anderen künstlichen oder natürlichen Oberflächen nach dem Vorhandensein von unbekannten Substanzen oder Gefahrstoffen, wie beispielsweise explosiven Materialien, durchgeführt werden. Der Vorteil ist, dass es damit möglich ist, nach solchen Gefahrstoffen zu suchen oder diese zu detektieren, ohne dass Personen vor Ort sein müssen. Durch eine kompakte Installation der Detektorvorrichtung in einem geeigneten Gehäuse ist das mobile Sensorsystem leicht zu transportieren und zu warten.

Es wird ein Verfahren zur Fernanalyse von Stoffen, insbesondere Gefahrstoffen, mit einer Detektorvorrichtung vorgeschlagen. Das Verfahren umfasst wenigstens die Schritte (i) Einstrahlen von gepulstem Laserlicht auf eine in einer Detektionsentfernung befindliche Probe; (ii) Auskoppeln und Detektieren eines ersten Referenzstrahls in einem ersten Detektor; (iii) Sammeln und/oder Fokussieren von an der Probe gestreutem Laserlicht in einem Teleskop; (iv) Auskoppeln und Detektieren von elastisch gestreutem Laserlicht als zweiter Referenzstrahl in einem zweiten Detektor; (v) Bestimmen der Detektionsentfernung in Echtzeit aus einer Zeitdifferenz zwischen Pulsen des ersten Referenzstrahls und Pulsen des zweiten Referenzstrahls; (vi) Weiterleiten des gestreuten Laserlichts an ein optisches Spektrometer; (vii) Durchführen einer spektralen Analyse des an der Probe gestreuten Laserlichts in dem Spektrometer; und (viii) Klassifikation des analysierten Laserlichts, insbesondere Klassifikation des analysierten Laserlichts nach Stoffklassen.

Der Zeitpunkt des Eintreffens des elastisch gestreuten Laserlichts auf den zweiten Detektor dient gleichzeitig als variabler Trigger für den Start der spektralen Analyse im Spektrometer.

Ein wesentlicher Vorteil des erfindungsgemäßen Verfahrens stellt die Bestimmung der Detektionsentfernung in Echtzeit ohne ein zusätzliches LIDAR-System dar. Durch den Einsatz eines gepulsten Lasersystems, dessen Laserpulse eine steile Anstiegsflanke aufweisen, kann mit Hilfe des ersten und des zweiten Detektors unmittelbar die Detektionsentfernung zur Probe bestimmt werden, indem über eine Laserlaufzeitmessung die zeitliche Verzögerung zwischen Aussenden und Wiedereintreffen des Laserpulses gemessen wird.

Der Zeitpunkt des Eintreffens des elastisch gestreuten Laserlichts auf den zweiten Detektor dient als variabler Trigger für das Spektrometer. Der Vorteil dieser Anordnung ist, dass sich der Triggerzeitpunkt automatisch zeitlich entsprechend der Änderung des Abstands zwischen Detektionssystem und Probe verschiebt. Bei dieser Detektion über ein sogenanntes Gating-Fenster wird somit stets nur das Messfenster analysiert, in dem auch ein Signal zu erwarten ist.

Störende Lichtsignale, die einen kontinuierlichen Hintergrund liefern und sowohl den nutzbaren Dynamikbereich des Detektors und als auch das Signal-Rausch Verhältnis senken, können beispielsweise durch Bandpass-Filterung und/oder eine Boxcar-Mittelung der Messsignale, welche eine gleitende Mittelwertbildung von Signalen ermöglicht, insbesondere zur Unterdrückung eines störenden Hintergrundes unter dem Messsignal, unterdrückt werden.

Mit diesen Vorteilen ermöglicht das erfindungsgemäße Verfahren geringere Detektionszeiten bei gesteigertem Signal-Rausch-Verhältnis im Vergleich zum Stand der Technik.

Nach einer vorteilhaften Ausgestaltung des Verfahrens kann eine Leistungskalibrierung durchgeführt werden und/oder, falls das gepulste Laserlicht mehrere Laserwellenlängen umfasst, eine Intensitätskalibrierung des gepulsten Laserlichts durchgeführt werden. Dies kann bevorzugt zwischen den Schritten (v) und (vi) erfolgen. Eine weitere Information liefern dabei die Detektorspannungen. Nach einer initialen Kalibrierung können die beiden Detektoren relativ zueinander kalibriert werden, um weitere Informationen über die Probe und deren Streueigenschaften zu gewinnen.

Nach einer vorteilhaften Ausgestaltung des Verfahrens kann elastisch gestreutes Laserlicht, welches über den zweiten Auskoppelspiegel als Strahlteiler, insbesondere als dichroitischen Strahlteiler, von inelastisch gestreutem Raman-Licht und Fluoreszenz-Licht getrennt wird, als zweiter Referenzstrahl in den zweiten Detektor ausgekoppelt werden. Der Zeitpunkt des Eintreffens des elastisch gestreuten Laserlichts auf den zweiten Detektor dient gleichzeitig als variabler Trigger für den Start der spektralen Analyse im Spektrometer. Der Vorteil dieses Verfahrens ist, dass sich der Triggerzeitpunkt automatisch zeitlich entsprechend der Änderung des Abstands zwischen Detektorvorrichtung und Probe verschiebt.

Nach einer vorteilhaften Ausgestaltung des Verfahrens kann zum Durchführen der spektralen Analyse das gestreute Laserlicht mittels eines schmalbandigen Filters, insbesondere eines Notch-Filters, gefiltert werden und/oder ein Wellenlängenbereich mittels eines durchstimmbaren Filters, insbesondere eines schmalbandigen durchstimmbaren Filters, ausgewählt werden.

Ein schmalbandiges Notch-Filter dient vorteilhaft zum Ausblenden einer bestimmten störenden Frequenz in einem breiteren Frequenzspektrum. Mittels eines insbesondere schmalbandigen durchstimmbaren Filters, dessen Filterkurve über das Spektrum durchgestimmt werden kann, können Signale mit hoher Empfindlichkeit bestimmt werden.

Nach einer vorteilhaften Ausgestaltung des Verfahrens kann Laserlicht mit einer Wellenlänge von höchstens 400 nm und/oder einer Pulswiederholrate im Bereich von 1 kHz bis 10 MHz, insbesondere bis 1 MHz, und/oder einer Pulsbreite von höchstens 10 ns verwendet werden. Je höher die Pulswiederholrate ist, desto schneller kann das Spektrum erfasst werden. Die Pulsbreite liegt typischerweise im Nanosekundenbereich. Damit der Abstand zur Probe bestimmt werden kann, sollte der Laserpuls möglichst eine steil ansteigende Flanke aufweisen.

Nach einer vorteilhaften Ausgestaltung des Verfahrens kann der erste Referenzstrahl vor dem ersten Detektor über eine erste Anpassungsoptik, insbesondere mit einem Bandpassfilter, gefiltert und/oder fokussiert werden. Dadurch kann störender Hintergrund oder sonstiges Störsignale unterdrückt oder zumindest reduziert werden.

Nach einer vorteilhaften Ausgestaltung des Verfahrens kann der zweite Referenzstrahl vor dem zweiten Detektor über eine zweite Anpassungsoptik, insbesondere mit einem Bandpassfilter, gefiltert und/oder fokussiert werden. Damit können mit einer geeigneten Optikeinheit eventuell störende Signale, welche nicht vom Laser stammen, beispielsweise mittels Bandpassfilter um die Zentralwellenlänge des Lasers unterdrückt werden.

Nach einer vorteilhaften Ausgestaltung des Verfahrens können Störsignale im gestreuten Laserlicht in dem Spektrometer, insbesondere in einer separaten Messeinheit, mit einer Boxcar-Mittelung von Messwerten eliminiert werden. Die Boxcar-Mittelung von Messwerten ermöglicht eine gleitende Mittelwertbildung von Signalen und kann günstig für die Elimination von störenden Hintergrundsignalen eingesetzt werden. Nach einer vorteilhaften Ausgestaltung des Verfahrens kann eine Divergenz und/oder ein Durchmesser des Laserstrahls vor einer Auskoppelung auf die Probe über einen dritten Auskoppelspiegel mittels einer Strahlanpassungseinheit eingestellt werden. Strahldurchmesser und/oder Divergenz des Laserlichts können so zweckmäßig an die gewünschte Messaufgabe und/oder der Detektionsentfernung angepasst werden.

Nach einer vorteilhaften Ausgestaltung des Verfahrens kann ein Wellenlängenbereich des gestreuten Laserlichts im Strahlengang nach dem Teleskop mittels einer Strahlanpassungseinheit, insbesondere mit einer Filtereinheit, ausgewählt werden. Insbesondere kann eine Fokussierung des gestreuten Laserlichts im Strahlengang von dem Teleskop auf die Strahlanpassungseinheit hin mit einer Autofokuseinheit, insbesondere über die Bestimmung der Detektionsentfernung gesteuert werden. Weiter können insbesondere die Messeinheit, und/oder das Filtermodul, und/oder die Autofokuseinheit in einer Referenzeinheit zur Verarbeitung von Signalen des ersten und des zweiten Detektors gesteuert werden. Unter Ausnutzung des erfinderischen Verfahrens lässt sich die Steuerung der Detektorvorrichtung in geeigneter Weise an eine gewünschte Messaufgabe anpassen und steuern. Die einzelnen Komponenten des Systems agieren weitestgehend autonom miteinander, sodass auch eine Fernanalyse von Stoffen vorzugsweise automatisch gesteuert ablaufen kann.

Nach einer vorteilhaften Ausgestaltung des Verfahrens kann ein Start einer Fernanalyse und damit ein Aussenden einzelner Laserpulse mittels einer Steuereinheit, insbesondere nach Eingabe an einem Computer, gesteuert werden. Mittels der Steuereinheit kann eine Messaufgabe manuell, über Eingabe am Computer, oder automatisiert, beispielsweise zu vorgewählten Zeitpunkten gestartet werden.

Es wird ein Computerprogrammprodukt vorgeschlagen, umfassend Befehle, die bei der Ausführung des Programms durch einen Computer diesen veranlassen, das erfindungsgemäße Verfahren auszuführen, wobei der Computer zur Steuerung der erfindungsgemäßen Detektorvorrichtung dient.

## Zeichnung

Weitere Vorteile ergeben sich aus der folgenden Zeichnungsbeschreibung. In den Figuren sind Ausführungsbeispiele der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen gemäß den Ansprüchen zusammenfassen.

**Es zeigen beispielhaft:**

Fig. 1 einen schematischen Aufbau von wesentlichen Komponenten einer Detektorvorrichtung zur Fernanalyse von Stoffen nach einem Ausführungsbeispiel der Erfindung;

Fig. 2 einen schematischen Aufbau eines Gesamtsystems einer Detektorvorrichtung nach einem weiteren Ausführungsbeispiel der Erfindung;

Fig. 3 einen zeitlichen Signalverlauf eines Verfahrens zur Fernanalyse von Stoffen nach einem Ausführungsbeispiel der Erfindung;

Fig. 4 typische Kalibrierungskurven des ersten und zweiten Detektors der Detektorvorrichtung;

Fig. 5 ein Beispiel zur Realisierung der Boxcar-Mittelung bei dem Verfahren nach einem Ausführungsbeispiel der Erfindung;

Fig. 6 ein Beispiel zur Abtastung der gestreuten Laserspektrums durch schrittweises Durchstimmen eines Bandpassfilterfensters bei dem Verfahren nach einem Ausführungsbeispiel der Erfindung;

Fig. 7 ein Vergleich von gemessenem und theoretischem rückgestreuten Laserspektrum bei dem Verfahren nach einem Ausführungsbeispiel der Erfindung; und

Fig. 8 ein Beispiel einer hyperspektralen Detektion mit einem abbildenden Sensor bei dem Verfahren nach einem Ausführungsbeispiel der Erfindung;

Fig. 9 ein Flowchart des Verfahrens zur Fernanalyse von Stoffen nach einem Ausführungsbeispiel der Erfindung;

Fig. 10 ein mobiles Sensorsystem mit einer Detektorvorrichtung zur Fernanalyse von Stoffen nach einem Ausführungsbeispiel der Erfindung;

**Ausführungsformen der Erfindung**

In den Figuren sind gleichartige oder gleichwirkende Komponenten mit gleichen Bezugszeichen beziffert. Die Figuren zeigen lediglich Beispiele und sind nicht beschränkend zu verstehen.

Im Folgenden verwendete Richtungsterminologie mit Begriffen wie "links", "rechts", "oben", "unten", "davor" "dahinter", "danach" und dergleichen dient lediglich dem besseren Verständnis der Figuren und soll in keinem Fall eine Beschränkung der Allgemeinheit darstellen. Die dargestellten Komponenten und Elemente, deren Auslegung und Verwendung können im Sinne der Überlegungen eines Fachmanns variieren und an die jeweiligen Anwendungen angepasst werden.

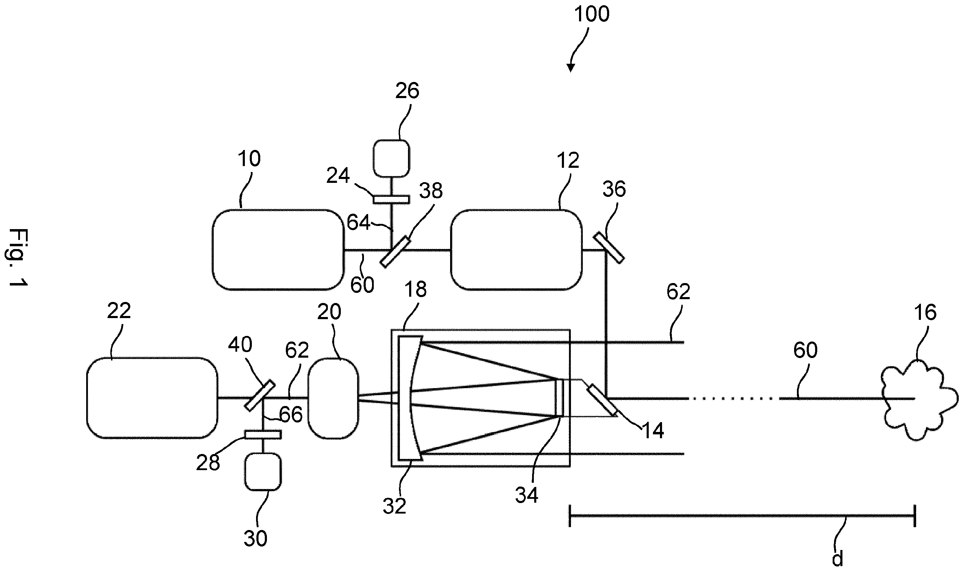

Figur 1 zeigt einen schematischen Aufbau von wesentlichen Komponenten einer Detektorvorrichtung 100 zur Fernanalyse von Stoffen, insbesondere Gefahrstoffen, nach einem Ausführungsbeispiel der Erfindung.

Die Detektorvorrichtung 100 umfasst einen Laser 10, welcher zum Einstrahlen von gepulstem Laserlicht 60 auf eine in einer Detektionsentfernung d befindlichen Probe 16 ausgebildet ist, und ein Teleskop 18, welches zum Sammeln und/oder Fokussieren von an der Probe 16 gestreutem Laserlicht 62 sowie zum Weiterleiten des gestreuten Laserlichts 62 in ein optisches Spektrometer 22 ausgebildet ist. Das optische Spektrometer 22 ist zur spektralen Analyse des an der Probe 16 gestreuten Laserlichts 62 ausgebildet. Im Strahlengang des Laserlichts 60 ist ein erster Auskoppelspiegel 38 zum Auskoppeln eines ersten Referenzstrahls 64 in einen ersten Detektor 26 vorgesehen. Weiter ist im Strahlengang des von der Probe 16 zurückgestreuten Laserlichts 62 ein zweiter Auskoppelspiegel 40 zum Auskoppeln eines zweiten Referenzstrahls 66 in einen zweiten Detektor 30 vorgesehen. Dabei kann aus einer Zeitdifferenz zwischen Pulsen des ersten Referenzstrahls 64 und Pulsen des zweiten Referenzstrahls 66 die Detektionsentfernung d in Echtzeit bestimmt werden.

Im Strahlengang des Laserlichts 60 vor einer Auskoppelung auf die Probe 16 über einen dritten Auskoppelspiegel 14 ist eine Strahlanpassungseinheit 12 vorgesehen, über welche eine Divergenz und/oder ein Durchmesser des Laserstrahls je nach gewünschter Messaufgabe eingestellt werden kann.

Als Probe 16 können feste oder flüssige chemische oder biologische Proben mit räumlicher Ausdehnung detektiert werden.

Im Strahlengang des ersten Referenzstrahls 64 ist eine erste Anpassungsoptik 24, insbesondere mit einem Bandpassfilter, vorgesehen.

Der zweite Auskoppelspiegel 40 ist als Strahlteiler, insbesondere als dichroitischer Strahlteiler, ausgebildet, mittels dessen von der Probe 16 elastisch gestreutes Laserlicht von inelastisch gestreutem Raman-Licht und Fluoreszenz-Licht getrennt in den Strahlengang des zweiten Referenzstrahls 66 ausgekoppelt wird. Im Strahlengang des zweiten Referenzstrahls 66 ist eine zweite Anpassungsoptik 28, insbesondere mit einem Bandpassfilter und/oder einer Fokussiereinheit, vorgesehen.

Das Verfahren zur Fernanalyse von Stoffen, insbesondere Gefahrstoffen, mit der Detektorvorrichtung 100 umfasst die Schritte (i) Einstrahlen von gepulstem Laserlicht 60 auf die in der Detektionsentfernung d befindliche Probe 16; (ii) Auskoppeln und Detektieren des ersten Referenzstrahls 64 in dem ersten Detektor 26; (iii) Sammeln und/oder Fokussieren von an der Probe 16 gestreutem Laserlicht 62 in das Teleskop 18; (iv) Auskoppeln und Detektieren des zweiten Referenzstrahls 66 in dem zweiten Detektor 30; (v) Bestimmen der Detektionsentfernung d in Echtzeit aus der Zeitdifferenz zwischen Pulsen des ersten Referenzstrahls 64 und Pulsen des zweiten Referenzstrahls 66; (vi) Weiterleiten des gestreuten Laserlichts 62 an das optische Spektrometer 22; (vii) Durchführen einer spektralen Analyse des an der Probe 16 gestreuten Laserlichts 62 in dem Spektrometer 22; und (viii) Klassifikation des analysierten Laserlichts 62, insbesondere Klassifikation des analysierten Laserlichts nach Stoffklassen.

Ferner kann das Verfahren zwischen Schritt (v) und Schritt (vii) weitere Schritte umfassen: (v.1) Durchführen einer Leistungskalibrierung des gepulsten Laserlichts 60; sowie (v.2) falls das gepulste Laserlicht 60 mehrere Laserwellenlängen umfasst, Durchführen einer Intensitätskalibrierung des gepulsten Laserlichts 60.

Zum Durchführen der spektralen Analyse kann das gestreute Laserlicht 62 mittels eines schmalbandigen Filters, insbesondere eines schmalbandigen Notch-Filters, gefiltert werden. Der Notch-Filter dient zur Unterdrückung der elastisch gestreuten Laserstrahlung, welche von dem zweiten Auskoppelspiegel 40 transmittiert wird und somit in das Spektrometer 22 gelangen könnte. Alternativ kann auch ein breitbandiger Filter verwendet werden, um beispielsweise nur den interessanten Wellenlängenbereich herauszuschneiden. Ein Wellenlängenbereich zur Analyse kann mittels eines schmalbandigen durchstimmbaren Filters ausgewählt und insbesondere kontinuierlich durchgestimmt werden.

Bei der Detektorvorrichtung 100 wird als Laserquelle 10 eine gepulste Lasereinheit eingesetzt. Der Laser 10 dient zur Anregung der zu messenden Probe. Die Wellenlänge wird in der Regel so gewählt, dass diese im UV-Bereich bei kleiner 400nm liegt. Hierfür gibt es zwei Gründe: Die Proportionalität zwischen Wellenlänge und Intensität des Rückstreusignals ist $1/\lambda^4$, sodass dadurch ein größeres Rückstreusignal zu erwarten ist. Außerdem können durch den höheren MZB-Wert (maximal zulässige Bestrahlung) im UV-Bereich augensichere Laserintensitäten gewährleistet werden. Der Laser wird gepulst betrieben. Die Pulswiederholrate kann sich von ca. 1 kHz bis 10 MHz, insbesondere bis 1 MHz, erstrecken. Je höher die Repetitionsrate, desto schneller kann das Spektrum erfasst werden. Die Pulsbreite sollte kleiner als 10 ns sein, damit die Entfernung über die Laserlaufzeit ermittelt werden kann. Damit der Abstand zur Probe über Laufzeitmessung der beiden Referenzstrahlen 64, 66 in Echtzeit bestimmt werden kann, sollte der Laserpuls eine steil ansteigende Flanke besitzen.

Über einen ersten Auskoppelspiegel 38 als sogenannter Pick-Off-Spiegel wird unmittelbar nach dem Laserausgang ein geringer Anteil des Lichts aus dem Strahlengang des ausgehenden Laserlichts 60 in den Strahlengang des ersten Referenzstrahls 64 ausgekoppelt. Dort werden mittels einer Anpassungsoptik 24 eventuell störende Signale, welche nicht vom Laser stammen, beispielsweise mittels Bandpassfilter um die Zentralwellenlänge des Lasers, unterdrückt. Das gefilterte Licht wird anschließend über eine Linse auf eine schnelle Fotodiode als ersten Detektor 26 fokussiert, sodass die einzelnen Laserpulse detektiert werden können. Eine typische Anstiegszeit der Fotodiode 26 kann dazu kleiner 1 ns betragen.

Der Hauptteil des Laserlichts durchläuft eine Einheit zur Strahlanpassung 12, in der beispielsweise der Strahldurchmesser bzw. die Divergenz angepasst werden kann, und wird anschließend über einen dritten Auskoppelspiegel 14 auf die zu untersuchende Probe 18 gelenkt. Sowohl das elastisch zurückgestreute Laserlicht aufgrund der Rayleigh-Streuung als auch das inelastisch gestreute, spektral verschobene Licht aufgrund des Raman-Effekts, sowie weitere Beitrage durch die elektronische Anregung als Fluoreszenzstrahlung werden mit einem Empfangsteleskop 18 aus einem Abstand zur Probe 16, welcher als Detektionsentfernung d bezeichnet wird, gesammelt, fokussiert und in eine weitere Einheit zur Strahlanpassung 20 eingekoppelt. Alternativ kann das gestreute Laserlicht auch in eine optische Faser zur räumlichen Trennung des Teleskops 18 von der Detektionsoptik, also dem Spektrometer 22, gekoppelt werden.

In der hier vorgeschlagenen Detektorvorrichtung 100 erfolgt nach dieser Strahlanpassungseinheit 20 eine spektrale Zerlegung des gestreuten Laserlichts 62. Mit einem dichroitischen Strahlteiler, einem sogenannten Razor Edge, als zweiten Auskoppelspiegel 40 wird das elastisch gestreute Laserlicht 62 in den Strahlengang des zweiten Referenzstrahls 66 reflektiert und vom inelastisch gestreuten Raman-Licht und Fluoreszenz-Licht separiert. Im zweiten Referenzstrahl 66 durchläuft der reflektierte Anteil zunächst eine Anpassungsoptik 28, welche ebenfalls aus einem Bandpass-Filter um die zentrale Wellenlänge der Laserlinie und einer Linse besteht, damit das spektral gesäuberte, rückgestreute Laserlicht auf eine zweite schnelle Fotodiode als zweiten Detektor 30 fokussiert werden kann.

Der transmittierte Anteil, u.a. das Raman-Signal, wird in ein Spektrometer 22 zur spektralen Analyse eingekoppelt. Mit einem schmalbandigen Notch-Filter um die Laserlinie wird zunächst das restliche elastisch gestreute Licht unterdrückt. Anschließend folgt ein schmalbandiger, schnell durchstimmbarer Filter, beispielsweise ein TBPF (Tunable Band Pass Filter) -, oder AOTF (Acousto Optical Tunable Filter) - Kristall. Das Spektrum kann nachfolgend aufgenommen werden, indem das spektrale Transmissionsfenster elektronisch über den interessanten Spektralbereich gescannt wird. Hierzu kann eine Detektion über ein Gating-Fenster mit einem sehr empfindlichen Punktsensor, beispielsweise einem PMT (photo multiplier tube), oder einem Kamerasystem als abbildenden Sensor eingesetzt werden.

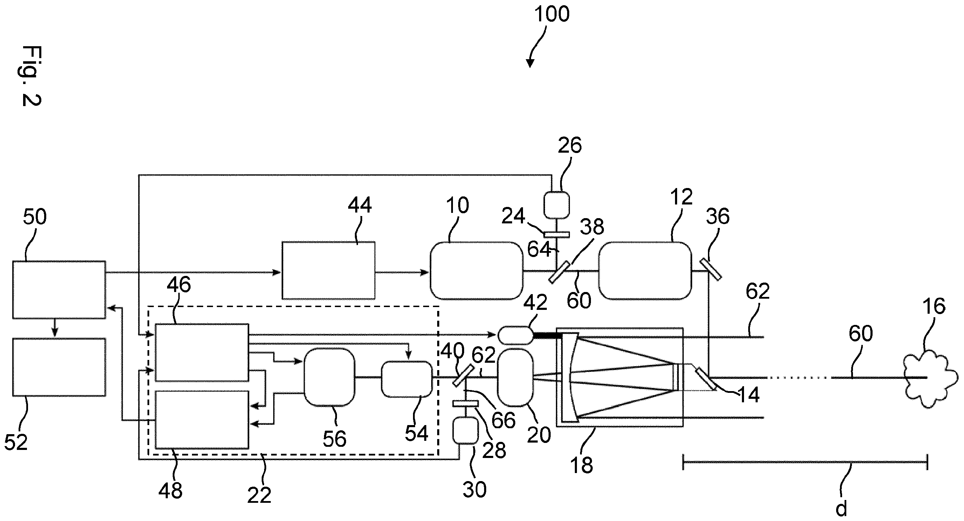

Figur 2 zeigt einen schematischen Aufbau eines Gesamtsystems einer Detektorvorrichtung 100 nach einem weiteren Ausführungsbeispiel der Erfindung.

Das Gesamtsystem umfasst beispielsweise weitere Komponenten wie Computer 50 und Klassifikator 52, die zum Betrieb der Detektorvorrichtung 100 zweckmäßig sind. Weiter sind einzelne Funktionen der Detektorvorrichtung 100 in separate Einheiten aufgespalten und in zusätzlichen Komponenten wie Steuereinheit, Referenzeinheit, Messeinheit umgesetzt.

Das Spektrometer 22 ist in einzelne Komponenten aufgeteilt und weist wenigstens ein Filtermodul 54, einen Detektor 56 und eine Messeinheit 48 auf.

In der Strahlanpassungseinheit 12 wird über eine Linsen-/Spiegelteleskopanordnung die Divergenz und der Durchmesser des Laserstrahls optimal auf den jeweiligen Anwendungszweck angepasst, beispielsweise geringe Strahlaufweitung über große Distanzen; hohe Laserintensität auf der Probe; augensicherer Laserbetrieb.

Der dritte Auskoppelspiegel 14 ermöglicht die Einstellung einer kollinearen oder bilinearen Strahlführung.

Das Teleskop 18 ist mit einer Autofokuseinheit 42 ausgebildet. welche zweckmäßig über die Bestimmung der Detektionsentfernung d steuerbar ist. Eine Fokussierung des gestreuten Laserlichts im Strahlengang 62 von dem Teleskop 18 auf die Strahlanpassungseinheit 20 hin kann mit der Autofokuseinheit 42 vorgenommen werden, insbesondere über die Bestimmung der Detektionsentfernung d gesteuert werden.

Über das als Empfangsteleskop eingesetzte Teleskop 18 wird das elastisch gestreute Laserlicht sowie das inelastisch gestreute Raman-Signal gesammelt. Neben dem interessierenden Raman-Signal wird auch Stör- und Streulicht, u.a. elastisch gestreutes Laserlicht, z.B. Rayleigh-Linie, Umgebungslicht, Sonnenlicht, gesammelt, welches teilweise das Nutzsignal verfälschen kann.

Im Strahlengang 62 des gestreuten Laserlichts nach dem Teleskop 18 ist eine Strahlanpassungseinheit 20, insbesondere mit einer Filtereinheit vorgesehen. Die Strahlanpassungseinheit 20 dient als optionales Modul einer Vorfilterung. Das fokussierte zurückgestreute Licht wird in eine optische Faser gekoppelt, damit es flexibel durch die Faser an einen bestimmten Ort geführt werden oder rekollimiert kann. Um bereits vorab die Rayleigh-Linie des Anregungslasers zu unterdrücken und Störsignale zu reduzieren wird ein Bandpass-Filter, bzw. ein Langpassfilter eingesetzt, mit dem der interessierende Wellenlangenbereich selektiert wird.

Das Filtermodul 54 kann als ein durchstimmbares Filter ausgebildet sein. Ein Wellenlängenbereich des gestreuten Laserlichts im Strahlengang 62 nach dem Teleskop 18 kann mittels der Strahlanpassungseinheit 20, insbesondere mit der Filtereinheit 54, ausgewählt werden. Das Filtermodul 54 ist so beschaffen, dass nur ein sehr schmalbandiger spektraler Bereich durch den Filter transmittiert wird. Dazu können beispielsweise ein akustooptischer oder elektrooptischer Modulator oder ein anderer durchstimmbarer Bandpassfilter eingesetzt werden. Das spektrale Fenster des Filters wird sukzessive durchgestimmt bis das komplette Spektrum abgedeckt ist.

Der Detektor 56 kann als ein Punktsensor oder als ein abbildender Sensor ausgebildet sein. Als Punktsensor kann der Detektor 56 beispielsweise als PMT-Detektor realisiert sein, beispielsweise als empfindlicher PMT-Detektor mit der Möglichkeit, eine Detektion über ein Gating-Fenster durchzuführen. Alternativ kann mit einer schnellen Datenerfassungskarte aus der kompletten Zeitspur ein Fenster herausgeschnitten werden, welches anschließend weiterverarbeitet wird.

Die erste Anpassungsoptik 24 kann als Bandpassfilter ausgebildet sein, dessen Fenster um die Zentralwellenlänge des Lasers liegt, sodass nur das Laserlicht transmittiert wird und andere Beiträge gefiltert werden. Zudem enthält diese Einheit eine Linse oder Spiegel, um das Licht auf den ersten Detektor 26 zu fokussieren.

Der erste Detektor 26 ist als schnelle Fotodiode mit einer kurzen Anstiegszeit und Abfallzeit ausgebildet, damit die Laserpulse zeitlich aufgelöst werden können. Das Eintreffen eines Laserpulses auf die Fotodiode definiert den Zeitnullpunkt der Messung.

Die zweite Anpassungsoptik 40 kann, analog der ersten Anpassungsoptik 24 ausgebildet, für den zweiten Referenzstrahl 66 nach dem Empfangsteleskop 18 angeordnet sein.

Der zweite Detektor 30 kann analog zum ersten Detektor 26 im zweiten Referenzstrahl 66 angeordnet sein. Der zweite Detektor 30 dient zur Messung der Laserlaufzeit und als variabler Trigger für die Datenakquisition.

Aus der Laufzeitmessung kann die Detektionsentfernung d zwischen Detektionssystem, also dem Teleskop 18, und der Probe 16 bestimmt werden. Diese Informationen können in Echtzeit an die Autofokuseinheit 42 gesendet werden, sodass stets die maximale Kopplungseffizienz bei Abbildung von Teleskop 18 auf die Strahlanpassungseinheit 20 erzielt wird.

Die Steuereinheit 44 triggert nach Eingabe am Computer 50 den Start der Messung sowie das Aussenden der einzelnen Laserpulse.

Eine Referenzeinheit 46 ist zur Verarbeitung von Signalen des ersten und des zweiten Detektors 26, 30, insbesondere zur Bestimmung der Zeitdifferenz in Echtzeit zwischen Pulsen der des ersten Referenzstrahls 64 und Pulsen des zweiten Referenzstrahls 66, ausgebildet. Mit der Referenzeinheit 46 kann die Messeinheit 48 gesteuert werden. Weiter können über die Referenzeinheit 46 das Filtermodul 54 wie auch die Autofokuseinheit 42 gesteuert werden.

In der Einheit 46 kann weiter beispielsweise eine Leistungskalibrierung des gepulsten Laserlichts 60 und/oder eine Intensitätskalibrierung bei einer multispektralen Anregung des gepulsten Laserlichts 60 durchgeführt werden.

Die Referenzeinheit 46 verarbeitet die Signale des ersten und zweiten Detektors 26, 30 über einen AD-Wandler und bestimmt daraus die Laserlaufzeit und die Triggerpunkte. Diese Information wird für die Festlegung des Gating-Fensters der Messeinheit 48 und für die Triggerung per Synchronisationssignal des durchstimmbaren Filtermoduls 54 genutzt. Die Information der Laserlaufzeit steuert die Autofokuseinheit 42.

Die Messeinheit 48 stellt ein System zum Auslesen der Messdaten des Punktdetektors 56 dar und wandelt das analoge elektrische Signal per AD-Wandler in ein digitales Signal um. Anschließend wird die Boxcar-Technik durch entsprechende Filterung mit ausgeschnittenen Signal- und Hintergrundfenstern angewendet und dadurch die Datenrate für die Weiterverarbeitung reduziert. Die Boxcar-Mittelung von Messwerten kann in der Messeinheit 48 realisiert sein.

Der Computer 50 dient zur Eingabe und Steuerung der Detektorvorrichtung 100. Zudem wird der Computer 50 für die Datenauswertung und Klassifizierung eingesetzt.

Im Klassifikator 52 werden die Spektren über einen Klassifizierungsalgorithmus ausgewertet und analysiert.

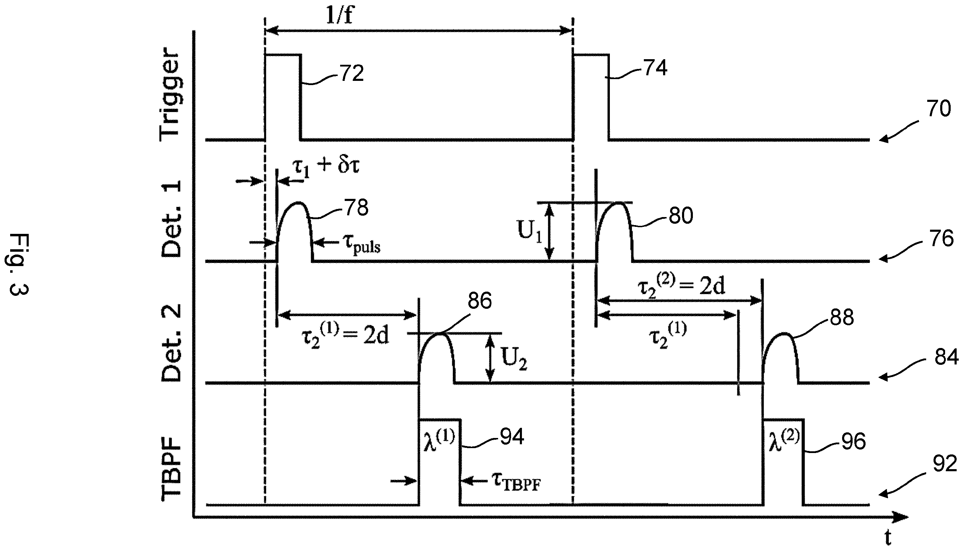

Figur 3 zeigt einen zeitlichen Signalverlauf des Verfahrens zur Fernanalyse von Stoffen nach einem Ausführungsbeispiel der Erfindung. In Figur 3 sind Signalverläufe des Triggersignals 70, der Signale im ersten und zweiten Detektor 76, 84 sowie das für das Spektrometer 22 gefilterte Signal 92 als Funktion der Zeit t dargestellt. Für zwei aufeinander folgende Laserpulse sind die Triggerpulse 72, 74, die Detektorsignale 78, 80 im ersten Detektor 26, die Detektorsignale 86, 88 im zweiten Detektor 30 sowie die gefilterten Signale des gestreuten Laserlichts 94, 96 dargestellt. Das Zeitintervall zwischen den Triggerpulsen 72, 74 ist durch den Kehrwert der Pulswiederholfrequenz f gegeben.

Wie in Figur 3 dargestellt, kann durch den Einsatz eines gepulsten Lasersystems, dessen Laserpulse eine steile Anstiegsflanke aufweisen, mit Hilfe der beiden Referenzstrahlen 64, 66 unmittelbar die Detektionsentfernung d zur Probe 18 in Echtzeit bestimmt werden, in dem die zeitliche Verzögerung zwischen Aussenden und Wiedereintreffen des Laserpulses gemessen wird (Laserlaufzeitmessung). Sowohl eine zeitliche Verzögerung $\tau_1$ als auch ein Jitter $\delta\tau$ zwischen dem Trigger, welcher die Emission eines Laserpulses auslöst, und der Emission des Laserpulses, hat keinen Einfluss auf die Entfernungsmessung. Entscheidend ist allein der Laufzeitunterschied $\tau_2$ zwischen dem Eintreffen des Laserpulses auf dem ersten Detektor 26 und dem zweiten Detektor 30, welcher gerade das doppelte der Detektionsentfernung d ist. Die Entfernung wird mit einer Messrate bestimmt, die allein durch die Repetitionsrate des Lasers 10 festgelegt ist. Dies hat den Vorteil, dass zu jeder Spektralmessung zeitsynchron auch die Detektionsentfernung d zur Probe 18 ermittelt wird und bei Bedarf eine Autofokuseinheit mit einer maximalen Geschwindigkeit, die durch die Laserrepetitionsrate gegeben ist, nachgestellt werden kann.

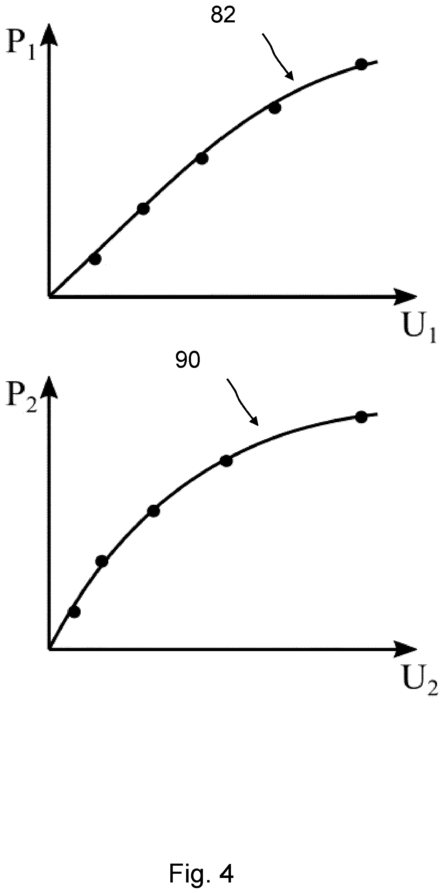

Eine weitere Information liefern die Detektorspannungen. Figur 4 zeigt typische Kalibrierungskurven 82, 90 des ersten und zweiten Detektors 26, 30 als Funktion der Leistung $P_1$, $P_2$ von der Spannung $U_1$, $U_2$. Mit Hilfe einer einmalig durchzuführenden Kalibrierungsmessung der Detektorvorrichtung 100, kann für jeden Detektor 26, 30 die Abhängigkeit zwischen der auf die Probe emittierten Laserleistung und der entsprechenden Detektorspannung ($U_1$ bzw. $U_2$) bestimmt werden. Während man bei ausschließlicher Verwendung des ersten Detektors 26 nur Information über die emittierte Laserleistung bekommt, erhält man durch den zweiten Detektor 30 zusätzlich die Information, wieviel Laserleistung von der Probe 16 zurückgestreut wird. Auf diese Weise kann eine Leistungskalibration durchgeführt werden. Damit stellt das Verhältnis zwischen den beiden kalibrierten Detektoren 26, 30 ein Maß für das Streuverhalten der Probe 16 dar. Der sich aus dem Verhältnis ergebende Faktor kann wiederum genutzt werden, um Rückschlüsse auf die relative Stärke des Raman-Signals zu ziehen, da dieses nicht nur von den Eigenschaften des angeregten Moleküls abhängt, sondern auch von der Entfernung zwischen Probe 16 und Detektorvorrichtung 100. Bei der Anregung mit mehreren Laserwellenlängen kann dieses Schema entsprechend erweitert werden: Nach einer initialen Kalibrierung erhält man damit die Möglichkeit, die unterschiedlichen Referenzstrahlen 64, 66 in einer Intensitätskalibration aufeinander zu kalibrieren, um weitere Information über die Probe und deren Streueigenschaften zu gewinnen.

Der Zeitpunkt des Eintreffens des elastisch gestreuten Laserlichts auf den zweiten Detektor 30 dient gleichzeitig als variabler Trigger für das Spektrometer 22. Der Vorteil dieser Anordnung ist, dass sich der Triggerzeitpunkt automatisch zeitlich entsprechend der Änderung des Abstands zwischen Detektorvorrichtung 100 und Probe 18 verschiebt (siehe Figur 3, zeitliche Verschiebung zwischen erstem Puls $\tau_2^{(1)}$ und zweitem Puls $\tau_2^{(2)}$). Bei der Detektion über ein Gating-Fenster wird somit stets nur das Messfenster analysiert, in dem auch ein Signal zu erwarten ist.

Störende Lichtsignale, die einen kontinuierlichen Hintergrund liefern und sowohl den nutzbaren Dynamikbereich des Detektors und damit das Signal-Rausch-Verhältnis senken, können auf zweierlei Arten effektiv unterdrückt werden.

Zum einen kann zur spektralen Analyse ein schneller durchstimmbarer Bandpassfilter (TBPF) eingesetzt werden, dessen Anstiegszeit und Abfallzeit viel kleiner als der Kehrwert der Repetitionsrate des Lasers ist. Hier wird der zuvor erläuterte Vorteil des variablen Triggerzeitpunkts ausgenutzt. Der Schaltzeitpunkt für den TBPF wird durch den variablen Trigger bestimmt, sodass nur innerhalb eines definierten Zeitintervalls ($\tau_{TBTF} \approx \tau_{Puls} \ll \mu sec$) Licht durch den TBPF transmittiert wird, in dem auch genau das Messsignal erwartet wird (siehe Figur 3).

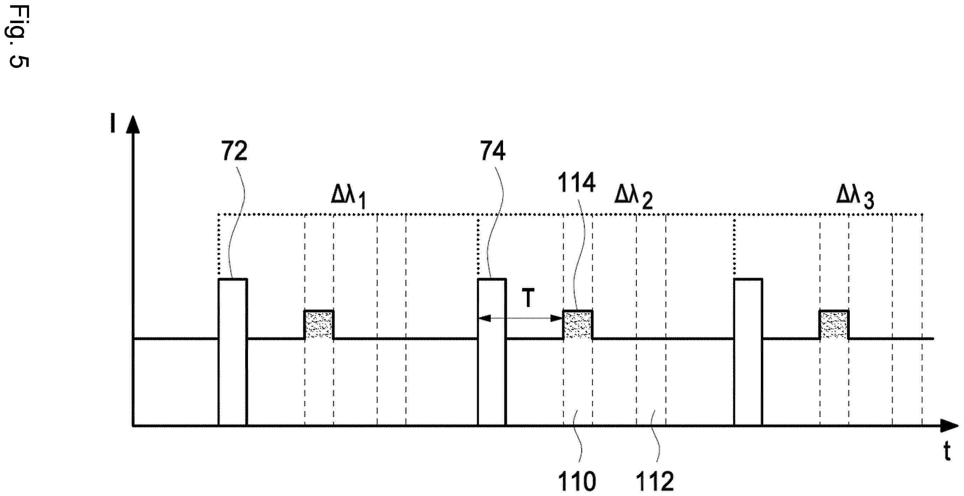

Zum anderen kann durch den gepulsten Betrieb des Lasers 10 die Boxcar-Technik angewendet werden. Figur 5 zeigt dazu ein Beispiel zur Realisierung der Boxcar-Mittelung bei dem Verfahren nach einem Ausführungsbeispiel der Erfindung.

Hierbei werden zwei unterschiedliche Messfenster definiert: Signalfenster 110 und Hintergrundfenster 112. In beiden Fällen wird über das Signal innerhalb des Messfensters 110, 112 integriert. Das Integral des Signalfensters 110 setzt sich somit aus dem Messsignal 114 und dem Hintergrundsignal zusammen. Dagegen erhält man beim Hintergrundfenster 112 nur das Integral des Hintergrunds. Durch Differenzbildung der beiden Integralwerte aus den beiden Messfenstern 110, 112 ergibt sich somit das gewünschte, hintergrundfreie Messsignal 114.

Der entfernungsabhängige Trigger bietet bei Anwendung der Boxcar-Technik den Vorteil, dass sich das Messfenster, bzw. das Hintergrundfenster automatisch entsprechend der Probenentfernung mitverschiebt, sodass man im Messfenster unabhängig von der Entfernung stets das inelastisch gestreute Raman-Signal detektiert und sich somit stets das bestmögliche Signal-Rausch Verhältnis ergibt.

Die der Erfindung zugrundeliegende messtechnische Umsetzung des Aufbaus der erfindungsgemäßen Detektorvorrichtung 100 unterscheidet sich ebenfalls von den bisher bekannten, klassischen Raman-Detektionssystemen.

Während beim klassischen Raman-System ein Spektrometer bzw. eine Kombination aus Monochromator und Detektor eingesetzt wird, wird in diesem Fall ein schmalbandiger, durchstimmbarer Filter verwendet, beispielsweise ein akustooptischer oder elektrooptischer Filter (AOTF, EOTF). Dabei wird, analog zu einem Bandpassfilter, ein spektral schmaler Bereich aus dem detektierten Signal selektiert. Nur das Licht aus diesem Wellenlängenintervall kann auf den Detektor gelangen. Durch sukzessives Durchstimmen des Transmissionsfensters des durchstimmbaren Filters kann das komplette Spektrum mit hoher Empfindlichkeit, innerhalb kurzer Zeit aufgezeichnet werden.

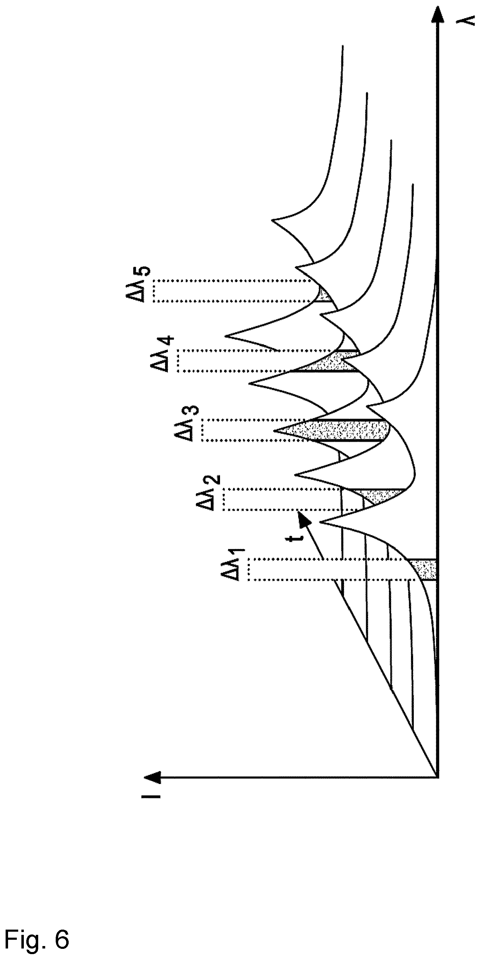

Dieses Vorgehen ist in Figur 6 veranschaulicht. Figur 6 zeigt ein Beispiel zur Abtastung des gestreuten Laserspektrums durch schrittweises Durchstimmen eines Bandpassfilterfensters, welches bei dem Verfahren nach einem Ausführungsbeispiel der Erfindung angewandt wird. Es ist ein typisches Raman-Spektrum mit einer Intensität I als Funktion der Wellenlänge $\lambda$ dargestellt. Als Funktion der Zeit t wird jeweils ein Wellenlängenfenster $\Delta\lambda_i$ über das Spektrum geschoben, in Figur 6 für 5 diskrete Zeitpunkte i=1, ..5 dargestellt.

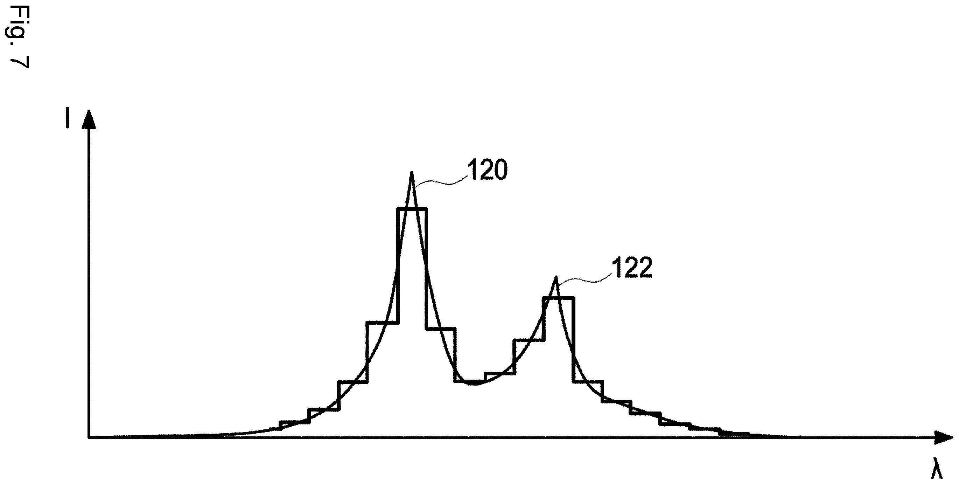

In Figur 7 ist ein Vergleich von gemessenem und theoretischem rückgestreuten Laserspektrum bei dem Verfahren nach einem Ausführungsbeispiel der Erfindung dargestellt. Das theoretische Spektrum ist als durchgezogene Linie dargestellt, das gemessene Spektrum als Histogramm. Der Peak 120 bei niedrigerer Wellenlänge $\lambda$ stellt den elastisch rückgestreuten Anteil des Laserlichts dar, während der Peak 122 bei höherer Wellenlänge den inelastisch gestreuten Raman-Anteil des rückgestreuten Laserlichts darstellt. Gemessenes und theoretisches Spektrum weisen in diesem Fall eine sehr gute Übereinstimmung auf. Bei kontinuierlichem Durchstimmen im Spektrometer 22 mit einem schmalbandigen durchstimmbaren Filter wird das gemessene Spektrum kontinuierlich und nähert sich dem theoretischen Spektrum an.

Das nachfolgende Beispiel, welches sowohl für Punktdetektion als auch für ein abbildendes System gültig ist, soll den Zeitvorteil des erfindungsgemäßen Verfahrens im Vergleich zum Stand der Technik darlegen.

Die Eigenschaften eines beispielhaften Lasersystems seien wie folgt: Wellenlänge 355 nm, Repetitionsrate 100 kHz, Pulsbreite 10 ns.

Der interessante Raman-Wellenlängenbereich für eine spätere Klassifizierung der Probe beträgt: 400 cm$^{-1}$ - 3000 cm$^{-1}$ (entspricht 360 nm - 397 nm).

Typische Auflösung eines durchstimmbaren AOTF-Filters beträgt 0.8 nm.

Bei voller Auflösung (0.8 nm) werden

$$\frac{400\,\text{nm} - 360\,\text{nm}}{0.8\,\text{nm}} = 50$$

Messpunkte benötigt. Dies kann bei einer Single-Shot-Messung innerhalb einer Messzeit von

$$T_{ges} = \frac{50}{100\,\text{kHz}} = 500\,\mu\text{sec}$$

erfolgen. Zur Steigerung des Signal-Rausch-Verhältnisses können mehrere Messungen nacheinander durchgeführt werden. Legt man die maximal mögliche Messzeit beispielsweise auf $T_{mess} = 1$ sec fest, dann können

$$\#_{Wdh} = \frac{T_{mess}}{T_{ges}} = \frac{1\,\text{sec}}{500\,\mu\text{sec}} = 2000$$

Wiederholungen durchgeführt werden.

Zum Vergleich: Die kürzeste Messdauer herkömmlicher Spektrometer liegt im Bereich mehrerer Millisekunden. Im vorliegenden Beispiel werden für die Aufnahme nur 500 $\mu$sec benötigt. Zudem ist bei gleicher Messdauer die vorgeschlagene Methode wesentlich empfindlicher.

Wird im Anschluss an die Messung eine Klassifizierung durchgeführt, dann ist es nicht notwendig, dass komplette Spektrum zu erfassen. Die Zusammensetzung des Messaufbaus ermöglicht hier, aufgrund der schnellen Anstiegszeiten und Abfallzeiten des durchstimmbaren Filters, dass bei Bedarf nur über bestimmte spektrale Fenster gescannt wird. Die Messzeit kann damit noch weiter reduziert werden.

Eine Wahl kann bei der erfindungsgemäßen Detektorvorrichtung getroffen werden zwischen Punktdetektion mit hoher Empfindlichkeit oder abbildendem Messsystem. Je nach Anforderung kann das System flexibel angepasst werden.

Bei der Punktdetektion können sehr empfindliche, schnelle Detektoren eingesetzt werden. Hierfür eignet sich insbesondere ein PMT (photo multiplier tube) - Detektor mit Gate-Modus, wodurch die Empfindlichkeit weiter gesteigert werden kann.

Als Detektor kann jedoch auch ein abbildender Sensor in Form eines Detektor-Arrays eingesetzt werden, beispielsweise ein SiPM (Silicon photo multiplier) - Array, und in Kombination mit dem durchstimmbaren Filter verwendet werden. Damit kann ein abbildendes System betrieben werden. In diesem Fall kann man die Probenumgebung räumlich erfassen und erhält ein sogenanntes hyperspektrales Bild, welches spektrale Intensitätsinformationen enthält.

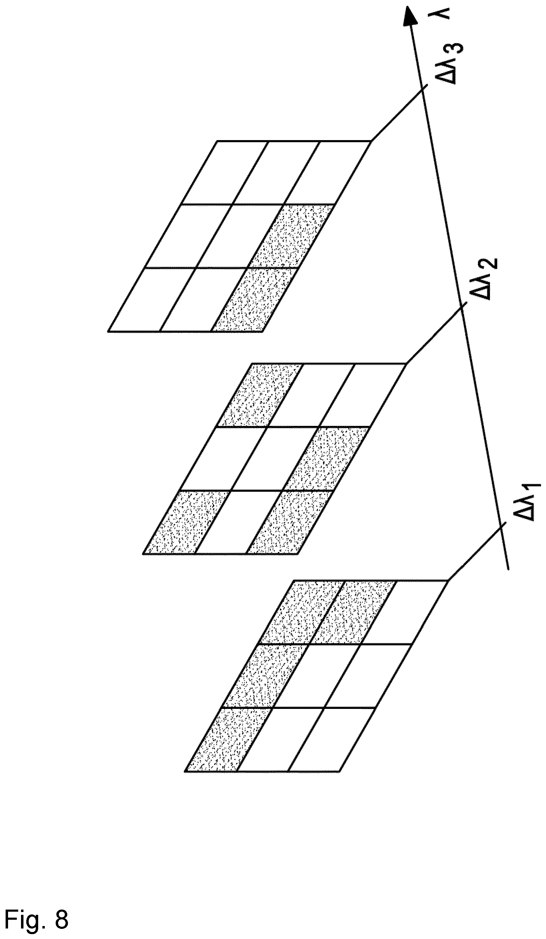

Figur 8 zeigt ein Beispiel einer hyperspektralen Detektion mit einem abbildenden Sensor bei dem Verfahren nach einem Ausführungsbeispiel der Erfindung. Dabei sind schematisch Pixelinhalte eines abbildenden Sensors für verschiedene Wellenlängen $\lambda$ dargestellt. Je nach Wellenlängenintervall $\Delta\lambda_i$, wobei 3 verschiedene Intervalle mit i=1, 2, 3 dargestellt sind, enthalten die Pixel unterschiedliche spektrale Informationen, veranschaulicht durch unterschiedlich geschwärzte Pixel.

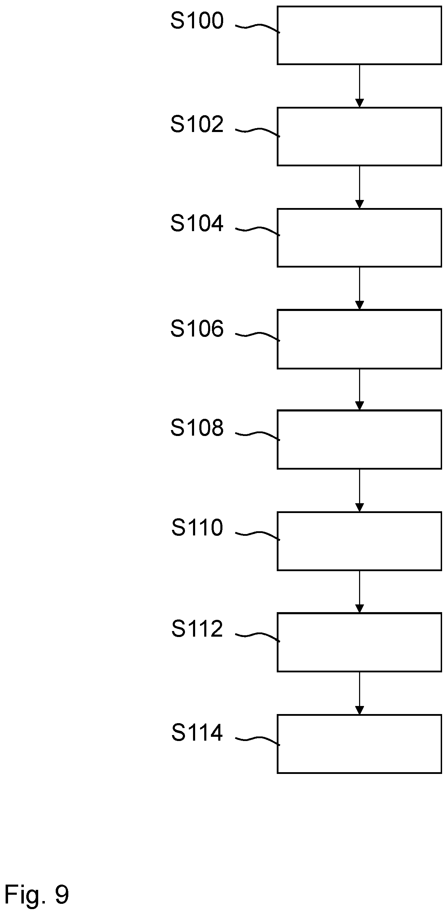

In Figur 9 ist ein Flowchart des Verfahrens zur Fernanalyse von Stoffen nach einem Ausführungsbeispiel der Erfindung dargestellt.

In Schritt S100 wird gepulstes Laserlicht auf die in der Detektionsentfernung d befindliche Probe 16 eingestrahlt. In Schritt S102 wird der erste Referenzstrahl 64 ausgekoppelt und in dem ersten Detektor 26 detektiert. Schritt S104 umfasst das Sammeln und/oder Fokussieren von an der Probe 16 gestreutem Laserlicht in das Teleskop 18. In Schritt S106 wird der zweite Referenzstrahl 66 ausgekoppelt und in dem zweiten Detektor 30 detektiert. In Schritt S108 wird die Detektionsentfernung d in Echtzeit aus der Zeitdifferenz zwischen Pulsen des ersten Referenzstrahls 64 und Pulsen des zweiten Referenzstrahls 66 bestimmt. In Schritt S110 wird das gestreute Laserlicht an das optische Spektrometer 22 weitergeleitet, gefolgt von dem Durchführen einer spektralen Analyse des an der Probe 16 gestreuten Laserlichts in dem Spektrometer 22, Schritt S112. In Schritt S114 wird schließlich eine Klassifikation des analysierten Laserlichts, insbesondere eine Klassifikation des analysierten Laserlichts nach Stoffklassen durchgeführt.

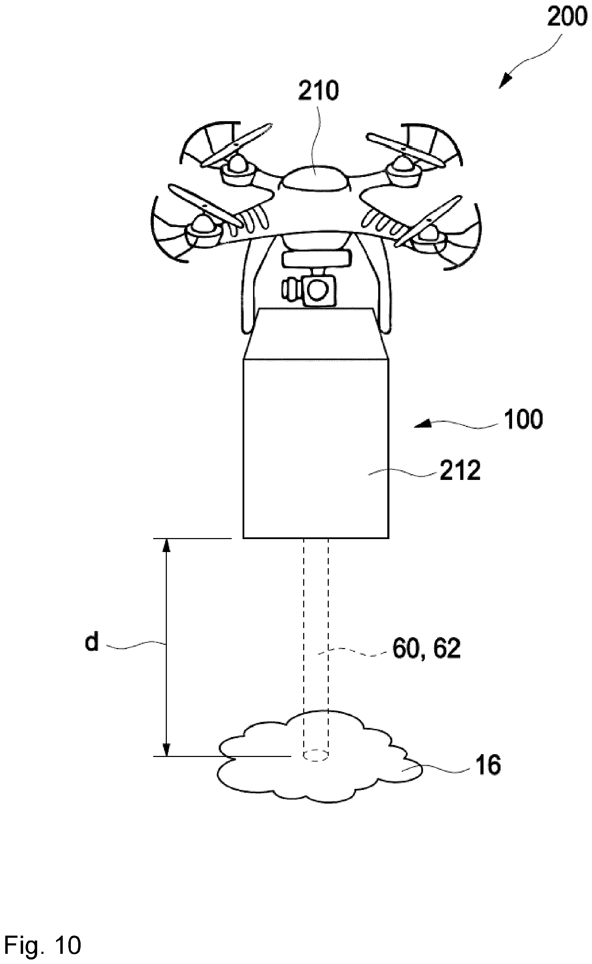

Figur 10 zeigt ein mobiles Sensorsystem 200 mit einer Detektorvorrichtung 100 zur Fernanalyse von Stoffen, insbesondere Gefahrstoffen, nach einem Ausführungsbeispiel der Erfindung. Das mobile Sensorsystem 200 umfasst ein Luftfahrzeug, insbesondere eine Drohne 210, mit einer Detektorvorrichtung 100. Die Detektorvorrichtung 100 ist in einem Gehäuse 212 angeordnet. Das Gehäuse 212 ist unterhalb der Drohne 210 angeordnet und mit dieser verbunden. An der Unterseite des Gehäuses 212 tritt der Laserstrahl 60 aus, und trifft auf die in der Detektionsentfernung d befindlichen Probe 16 und wird von dieser teilweise rückgestreut. Das rückgestreute Laserlicht 62 tritt an der Unterseite des Gehäuses 212 wieder in die Detektorvorrichtung 100 ein und wird von dieser analysiert. So können Stoffklassen der Probe 16 klassifiziert werden.

| | |
|---|---|
| 10 | Laser |
| 12 | Strahlanpassungseinheit |
| 14 | Auskoppelspiegel |
| 16 | Probe |
| 18 | Teleskop |
| 20 | Strahlanpassungseinheit |
| 22 | Spektrometer |
| 24 | Anpassungsoptik |
| 26 | Detektor 1 |
| 28 | Anpassungsoptik |
| 30 | Detektor 2 |
| 32 | Hohlspiegel |
| 34 | Fangspiegel |
| 36 | Ablenkspiegel |
| 38 | Auskoppelspiegel |
| 40 | Strahlteiler |
| 42 | Autofokuseinheit |
| 44 | Steuereinheit |
| 46 | Referenzeinheit |
| 48 | Messeinheit |
| 50 | Computer |
| 52 | Klassifikator |
| 54 | Filtermodul |
| 56 | Detektor |
| 60 | Strahlengang ausgehende Laserlicht |
| 62 | Strahlengang rückgestreutes Laserlicht |
| 64 | erster Referenzstrahl |
| 66 | zweiter Referenzstrahl |

| | |
|---|---|
| 70 | Triggersignal |
| 72 | Triggerpuls 1 |
| 74 | Triggerpuls 2 |
| 76 | Signal Detektor 1 |
| 78 | Puls 1 |
| 80 | Puls 2 |
| 82 | Kalibrierkurve |
| 84 | Signal Detektor 2 |
| 86 | Puls 1 |
| 88 | Puls 2 |
| 90 | Kalibrierkurve |
| 92 | Filtersignal |
| 94 | Puls 1 |
| 96 | Puls 2 |
| 100 | Detektoreinrichtung |
| 110 | Signalfenster |
| 112 | Hintergrundfenster |
| 114 | Messsignal |
| 120 | elastisch gestreutes Laserlicht |
| 122 | Raman-Anteil |
| 200 | mobiles Sensorsystem |
| 210 | Drohne |
| 212 | Gehäuse |
| d | Detektionsentfernung |

## Patentansprüche

1. Detektorvorrichtung (100) zur Fernanalyse von Stoffen, insbesondere Gefahrstoffen, umfassend wenigstens einen Laser (10), welcher zum Einstrahlen von gepulstem Laserlicht (60) auf eine in einer Detektionsentfernung (d) befindlichen Probe (16) ausgebildet ist,

   ein Teleskop (18), welches zum Sammeln und/oder Fokussieren von an der Probe (16) gestreutem Laserlicht (62) sowie zum Weiterleiten des gestreuten Laserlichts (62) in ein optisches Spektrometer (22) ausgebildet ist, welches optische Spektrometer (22) zur spektralen Analyse des an der Probe (16) gestreuten Laserlichts (62) ausgebildet ist,

   wobei im Strahlengang des ausgesendeten Laserlichts (60) ein erster Auskoppelspiegel (38) zum Auskoppeln eines ersten Referenzstrahls (64) in einen ersten Detektor (26) vorgesehen ist und im Strahlengang des gestreuten Laserlichts (62) ein zweiter Auskoppelspiegel (40) zum Auskoppeln eines zweiten Referenzstrahls (66) in einen zweiten Detektor (30) vorgesehen ist, wobei der zweite Auskoppelspiegel (40) als Strahlteiler ausgebildet ist, mittels dessen von der Probe (16) elastisch gestreutes Laserlicht von inelastisch gestreutem Raman-Licht und/oder Fluoreszenz-Licht getrennt in den Strahlengang des zweiten Referenzstrahls (66) auskoppelbar ist,
und eine Einheit (46) zur Bestimmung einer Zeitdifferenz zwischen Pulsen des ersten Referenzstrahls (64) und Pulsen des zweiten Referenzstrahls (66) vorgesehen ist, wobei die Einheit (46) zur Bestimmung der Detektionsentfernung (d) in Echtzeit aus der Zeitdifferenz ausgebildet ist, wobei der Zeitpunkt des Eintreffens des elastisch gestreuten Laserlichts (62) auf den zweiten Detektor (30) gleichzeitig als variabler Trigger für den Start der spektralen Analyse im Spektrometer (22) dient.

2. Detektorvorrichtung nach Anspruch 1, **dadurch gekennzeichnet, dass** die Einheit (46) zu einer Leistungskalibrierung des gepulsten Laserlichts (60) und/oder zu einer Intensitätskalibrierung bei einer multispektralen Anregung des gepulsten Laserlichts (60) ausgebildet ist.

3. Detektorvorrichtung nach Anspruch 1 oder 2, **dadurch gekennzeichnet, dass** der zweite Auskoppelspiegel (40) als dichroitischer Strahlteiler ausgebildet ist.

4. Detektorvorrichtung nach einem der vorhergehenden Ansprüche, **dadurch gekennzeichnet, dass** im Strahlengang des ersten Referenzstrahls (64) eine erste Anpassungsoptik (24), insbesondere mit einem Bandpassfilter, vorgesehen ist und/oder dass im Strahlengang des zweiten Referenzstrahls (66) eine zweite Anpassungsoptik (28), insbesondere mit einem Bandpassfilter und/oder einer Fokussiereinheit, vorgesehen ist.

5. Detektorvorrichtung nach einem der vorhergehenden Ansprüche, **dadurch gekennzeichnet, dass** das Spektrometer (22) wenigstens ein Filtermodul (54), einen Detektor (56) und eine Messeinheit (48) aufweist, insbesondere dass das Filtermodul (54) als ein durchstimmbares Filter, und/oder dass der Detektor (56) als ein Punktsensor oder ein abbildender Sensor, und/oder dass die Messeinheit (48) mit einer Boxcar-Mittelung von Messwerten ausgebildet ist.

6. Detektorvorrichtung nach einem der vorhergehenden Ansprüche, **dadurch gekennzeichnet, dass** im Strahlengang des Laserlichts (60) vor einer Auskoppelung auf die Probe (16) über einen dritten Auskoppelspiegel (14) eine Strahlanpassungseinheit (12) vorgesehen ist und/oder dass im Strahlengang des gestreuten Laserlichts (62) nach dem Teleskop (18) eine Strahlanpassungseinheit (20), insbesondere mit einer Filtereinheit vorgesehen ist.

7. Mobiles Sensorsystem (200) zur Fernanalyse von Stoffen, insbesondere Gefahrstoffen, umfassend ein unbemanntes Bodenfahrzeug oder Luftfahrzeug, insbesondere eine Drohne (210), mit einer Detektorvorrichtung (100) nach einem der vorhergehenden Ansprüche, wobei die Detektorvorrichtung (100) in einem Gehäuse (212) angeordnet ist, welches mit dem Bodenfahrzeug oder Luftfahrzeug verbunden, insbesondere abnehmbar verbunden ist.

8. Verfahren zur Fernanalyse von Stoffen, insbesondere Gefahrstoffen, mit einer Detektorvorrichtung (100) nach einem der Ansprüche 1 bis 6, umfassend wenigstens die Schritte

(i) Einstrahlen von gepulstem Laserlicht (60) auf eine in einer Detektionsentfernung (d) befindliche Probe (16);
(ii) Auskoppeln und Detektieren eines ersten Referenzstrahls (64) in dem ersten Detektor (26);
(iii) Sammeln und/oder Fokussieren von an der Probe (16) gestreutem Laserlicht (62) in dem Teleskop (18);
(iv) Auskoppeln und Detektieren von elastisch gestreutem Laserlicht als zweiter Referenzstrahl (66) in dem zweiten Detektor (30);
(v) Bestimmen der Detektionsentfernung (d) in Echtzeit aus einer Zeitdifferenz zwischen Pulsen des ersten Referenzstrahls (64) und Pulsen des zweiten Referenzstrahls (66);
(vi) Weiterleiten des gestreuten Laserlichts (62) an das optische Spektrometer (22);
(vii) Durchführen einer spektralen Analyse des an der Probe (16) gestreuten Laserlichts (62) in dem Spektrometer (22);
(viii) Klassifikation des analysierten Laserlichts, insbesondere Klassifikation des analysierten Laserlichts (62) nach Stoffklassen,

wobei der Zeitpunkt des Eintreffens des elastisch gestreuten Laserlichts (62) auf den zweiten Detektor (30) gleichzeitig als variabler Trigger für den Start der spektralen Analyse im Spektrometer (22) dient.

9. Verfahren nach Anspruch 8, **gekennzeichnet, durch** die weiteren Schritte zwischen Schritt (v) und (vi):

(v.1) Durchführen einer Leistungskalibrierung des gepulsten Laserlichts (60);
(v.2) falls das gepulste Laserlicht (60) mehrere Laserwellenlängen umfasst, Durchführen einer Intensitätskalibrierung des gepulsten Laserlichts (60).

10. Verfahren nach Anspruch 8 oder 9, **dadurch gekennzeichnet, dass** elastisch gestreutes Laserlicht, welches über den zweiten Auskoppelspiegel (40) als Strahlteiler, insbesondere als dichroitischen Strahlteiler, von inelastisch gestreutem Raman-Licht und Fluoreszenz-Licht getrennt wird, als zweiter Referenzstrahl (66) in den zweiten Detektor (30) ausgekoppelt wird.

**11.** Verfahren nach einem der Ansprüche 8 bis 10, **dadurch gekennzeichnet, dass** zum Durchführen der spektralen Analyse das gestreute Laserlicht (62) mittels eines schmalbandigen Filters, insbesondere eines Notch-Filters, gefiltert wird und/oder ein Wellenlängenbereich mittels eines durchstimmbaren Filters, insbesondere eines schmalbandigen durchstimmbaren Filters, ausgewählt wird.

**12.** Verfahren nach einem der Ansprüche 8 bis 11, **dadurch gekennzeichnet, dass** der erste Referenzstrahl (64) vor dem ersten Detektor (26) über eine erste Anpassungsoptik (24), insbesondere mit einem Bandpassfilter, gefiltert und/oder fokussiert wird und/oder dass der zweite Referenzstrahl (66) vor dem zweiten Detektor (30) über eine zweite Anpassungsoptik (30), insbesondere mit einem Bandpassfilter, gefiltert und/oder fokussiert wird.

**13.** Verfahren nach einem der Ansprüche 8 bis 12, **dadurch gekennzeichnet, dass** Störsignale im gestreuten Laserlicht (62) in dem Spektrometer (18), insbesondere in einer Messeinheit (48), mit einer Boxcar-Mittelung von Messwerten eliminiert werden.

**14.** Verfahren nach einem der Ansprüche 8 bis 13, **dadurch gekennzeichnet, dass** eine Divergenz und/oder ein Durchmesser des Laserstrahls (60) vor einer Auskoppelung auf die Probe (16) über einen dritten Auskoppelspiegel (14) mittels einer Strahlanpassungseinheit (12) eingestellt wird.

**15.** Verfahren nach einem der Ansprüche 8 bis 14, **dadurch gekennzeichnet, dass** ein Wellenlängenbereich des gestreuten Laserlichts (62) im Strahlengang nach dem Teleskop (18) mittels einer Strahlanpassungseinheit (20), insbesondere mit einer Filtereinheit (54), ausgewählt wird, insbesondere dass eine Fokussierung des gestreuten Laserlichts (62) im Strahlengang von dem Teleskop (18) auf die Strahlanpassungseinheit (20) hin mit einer Autofokuseinheit (42), insbesondere über die Bestimmung der Detektionsentfernung (d) gesteuert wird, insbesondere, dass die Messeinheit (48), und/oder das Filtermodul (54), und/oder die Autofokuseinheit (42) in einer Referenzeinheit (46) zur Verarbeitung von Signalen des ersten und des zweiten Detektors (26,30) gesteuert werden.

**16.** Verfahren nach einem der Ansprüche 8 bis 15, **dadurch gekennzeichnet, dass** ein Start einer Fernanalyse einer Probe (16), insbesondere ein Aussenden einzelner Laserpulse (60), mittels einer Steuereinheit (44), insbesondere nach Eingabe an einem Computer (50), gesteuert wird.

**17.** Computerprogrammprodukt, umfassend Befehle, die bei der Ausführung des Programms durch einen Computer (50) diesen veranlassen, das Verfahren nach einem der Ansprüche 8 bis 16 auszuführen, wobei der Computer (50) zur Steuerung einer Detektorvorrichtung (100) nach einem der Ansprüche 1 bis 6 dient.

## Claims

**1.** Detector device (100) for the remote analysis of substances, in particular hazardous substances, comprising at least one laser (10), which is configured to irradiate pulsed laser light (60) onto a sample (16) located at a detection distance (d), a telescope (18), which is configured for collecting and/or focusing laser light (62) scattered on the sample (16) and for transmitting the scattered laser light (62) into an optical spectrometer (22),

which optical spectrometer (22) is configured for the spectral analysis of the laser light (62) scattered on the sample (16),
wherein in the beam path of the emitted laser light (60) a first decoupling mirror (38) is provided for decoupling a first reference beam (64) into a first detector (26), and in the beam path of the scattered laser light (62) a second decoupling mirror (40) is provided for decoupling a second reference beam (66) into a second detector (30),
wherein the second decoupling mirror (40) is configured as a beam splitter, by means of which laser light elastically scattered by the sample (16) can be decoupled separately from inelastically scattered Raman light and/or fluorescent light into the beam path of the second reference beam (66),
and a unit (46) is provided for determining a time difference between pulses of the first reference beam (64) and pulses of the second reference beam (66), wherein the unit (46) is configured for determining the detection distance (d) in real time from the time difference,
wherein the time of arrival of the elastically scattered laser light (62) on the second detector (30) is used simultaneously as a variable trigger for starting the spectral analysis in the spectrometer (22).

**2.** Detector device according to claim 1, **characterised in that** the unit (46) is configured for a power calibration of the pulsed laser light (60) and/or for an intensity calibration upon multispectral excitation of the pulsed laser light (60).

3. Detector device according to claim 1 or 2, **characterised in that** the second decoupling mirror (40) is configured as a dichroic beam splitter.

4. Detector device according to any of the preceding claims, **characterised in that** a first adjustment optics (24) is provided in the beam path of the first reference beam (64), in particular with a bandpass filter, and/or **in that** a second adjustment optics (28) is provided in the beam path of the second reference beam (66), in particular with a bandpass filter and/or a focusing unit.

5. Detector device according to any of the preceding claims, **characterised in that** the spectrometer (22) has at least one filter module (54), a detector (56) and a measuring unit (48), in particular **in that** the filter module (54) is configured as a tunable filter, and/or in that the detector (56) is configured as a point sensor or an imaging sensor, and/or **in that** the measuring unit (48) is configured with a boxcar averaging of measured values.

6. Detector device according to any of the preceding claims, **characterised in that** a beam adjustment unit (12) is provided in the beam path of the laser light (60) before being decoupled to the sample (16) via a third decoupling mirror (14) and/or **in that** a beam adjustment unit (20), in particular with a filter unit, is provided in the beam path of the scattered laser light (62) after the telescope (18).

7. Mobile sensor system (200) for the remote analysis of substances, in particular hazardous substances, comprising an unmanned ground vehicle or aircraft, in particular a drone (210), with a detector device (100) according to any of the preceding claims, wherein the detector device (100) is arranged in a housing (212), which is connected to the ground vehicle or aircraft, in particular detachably connected.

8. Method for the remote analysis of substances, in particular hazardous substances, with a detector device (100) according to any of claims 1 to 6, comprising at least the steps of:

   (i) irradiating pulsed laser light (60) onto a sample (16) located at a detection distance (d);
   (ii) decoupling and detecting a first reference beam (64) in the first detector (26);
   (iii) collecting and/or focusing laser light (62) scattered on the sample (16) in the telescope (18);
   (iv) decoupling and detecting elastically scattered laser light as a second reference beam (66) in the second detector (30);
   (v) determining the detection distance (d) in real time based on a time difference between pulses of the first reference beam (64) and pulses of the second reference beam (66);
   (vi) forwarding the scattered laser light (62) to the optical spectrometer (22);
   (vii) performing a spectral analysis of the laser light (62) scattered on the sample (16) in the spectrometer (22);
   (viii) classifying the analysed laser light, in particular classifying the analysed laser light (62) according to substance classes,

wherein the time of arrival of the elastically scattered laser light (62) on the second detector (30) is used simultaneously as a variable trigger for starting the spectral analysis in the spectrometer (22).

9. Method according to claim 8, **characterised by** the further steps between step (v) and (vi):

   (v.1) performing a power calibration of the pulsed laser light (60);
   (v.2) if the pulsed laser light (60) comprises multiple laser wavelengths, performing an intensity calibration of the pulsed laser light (60).

10. Method according to claim 8 or 9, **characterised in that** elastically scattered laser light, which is separated from inelastically scattered Raman light and fluorescent light via the second decoupling mirror (40) as a beam splitter, in particular a dichroic beam splitter, is decoupled into the second detector (30) as a second reference beam (66).

11. Method according to any of claims 8 to 10, **characterised in that** for performing the spectral analysis the scattered laser light (62) is filtered by means of a narrowband filter, in particular a notch filter, and/or a wavelength range is selected by means of a tunable filter, in particular a narrow band tunable filter.

12. Method according to any of claims 8 to 11, **characterised in that** the first reference beam (64) is filtered and/or focused before the first detector (26) via first adjustment optics (24), in particular with a bandpass filter, and/or **in that** the second reference beam (66) is filtered and/or focused before the second detector (30) via second adjustment optics (30), in particular with a bandpass filter.

13. Method according to any of claims 8 to 12, **characterised in that** interfering signals in the scattered laser light (62) are eliminated in the spectrometer (18), in particular in a measurement unit (48), with a boxcar averaging of measured values.

**14.** Method according to any of claims 8 to 13, **characterised in that** a divergence and/or a diameter of the laser beam (60) is adjusted by means of a beam adjustment unit (12) before being decoupled onto the sample (16) via a third decoupling mirror (14).

**15.** Method according to any of claims 8 to 14, **characterised in that** a wavelength range of the scattered laser light (62) in the beam path after the telescope (18) is selected by means of a beam adjustment unit (20), in particular with a filter unit (54), in particular **in that** a focusing of the scattered laser light (62) in the beam path from the telescope (18) to the beam adjustment unit (20) is controlled by an autofocus unit (42), in particular by determining the detection distance (d), in particular **in that** the measuring unit (48) and/or the filter module (54), and/or the autofocus unit (42) are controlled in a reference unit (46) for processing signals from the first and the second detector (26, 30).

**16.** Method according to any of claims 8 to 15, **characterised in that** a start of a remote analysis of a sample (16), in particular emitting individual laser pulses (60), is controlled by means of a control unit (44), in particular after input to a computer (50).

**17.** Computer program product, comprising commands, which on the execution of the program by a computer (50) cause the latter to execute the method according to any of claims 8 to 16, wherein the computer (50) is used for controlling a detector device (100) according to any of claims 1 to 6.

**Revendications**

**1.** Dispositif de détection (100) pour l'analyse à distance de substances, en particulier de substances dangereuses, comprenant au moins un laser (10) qui est réalisé pour émettre de la lumière laser (60) pulsée sur un échantillon (16) se trouvant à une distance de détection (d), un télescope (18) qui est réalisé pour la collecte et/ou la focalisation de la lumière laser (62) diffusée au niveau de l'échantillon (16) ainsi que pour la transmission de la lumière laser (62) diffusée dans un spectromètre optique (22),

lequel spectromètre optique (22) est réalisé pour l'analyse spectrale de la lumière laser (62) diffusée au niveau de l'échantillon (16), dans lequel dans le trajet de faisceau de la lumière laser (60) émise, un premier miroir de découplage (38) est prévu pour le découplage d'un premier faisceau de référence (64) dans un premier détecteur (26) et dans le trajet de faisceau de la lumière laser (62) diffusée, un deuxième miroir de découplage (40) est prévu pour le découplage d'un second faisceau de référence (66) dans un second détecteur (30), dans lequel le deuxième miroir de découplage (40) est réalisé comme séparateur de faisceau, au moyen duquel de la lumière laser diffusée élastiquement par l'échantillon (16) peut être découplée de la lumière Raman et/ou de la lumière de fluorescence diffusée de manière non élastique séparément dans le trajet de faisceau du second faisceau de référence (66), et une unité (46) pour la détermination d'une différence de temps entre des pulsations du premier faisceau de référence (64) et des pulsations du second faisceau de référence (66) est prévue, dans lequel l'unité (46) pour la détermination de la distance de détection (d) est réalisée en temps réel à partir de la différence de temps, dans lequel le moment de l'arrivée de la lumière laser (62) diffusée élastiquement sur le second détecteur (30) sert en même temps de déclencheur variable pour le démarrage de l'analyse spectrale dans le spectromètre (22).

**2.** Dispositif de détection selon la revendication 1, **caractérisé en ce que** l'unité (46) est réalisée pour un étalonnage de puissance de la lumière laser (60) pulsée et/ou pour un étalonnage d'intensité pour une excitation multispectrale de la lumière laser (60) pulsée.

**3.** Dispositif de détection selon la revendication 1 ou 2, **caractérisé en ce que** le deuxième miroir de découplage (40) est réalisé comme diviseur de faisceau dichroïque.

**4.** Dispositif de détection selon l'une quelconque des revendications précédentes, **caractérisé en ce que** dans le trajet de faisceau du premier faisceau de référence (64), une première optique d'adaptation (24), en particulier avec un filtre passe-bande, est prévue et/ou que dans le trajet de faisceau du second faisceau de référence (66), une seconde optique d'adaptation (28), en particulier avec un filtre passe-bande et/ou une unité de focalisation, est prévue.

**5.** Dispositif de détection selon l'une quelconque des revendications précédentes, **caractérisé en ce que** le spectromètre (22) présente au moins un module de filtre (54), un détecteur (56) et une unité de mesure (48), en particulier que le module de filtre (54) est réalisé comme un filtre ajustable, et/ou que le détecteur (56) est réalisé comme un capteur ponctuel ou un capteur d'illustration, et/ou que l'unité de mesure (48) est réalisée avec une moyenne de Boxcar de valeurs de mesure.

**6.** Dispositif de détection selon l'une quelconque des revendications précédentes, **caractérisé en ce que** dans le trajet de faisceau de la lumière laser (60) avant un découplage sur l'échantillon (16) par le biais d'un troisième miroir de découplage (14), une unité d'adaptation de faisceau (12) est prévue et/ou que dans le trajet de faisceau de la lumière laser (62) diffusée selon le télescope (18), une unité d'adaptation de faisceau (20), en particulier avec une unité de filtre est prévue.

7. Système de capteur mobile (200) pour l'analyse à distance de substances, en particulier de substances dangereuses, comprenant un véhicule terrestre sans équipage ou véhicule aérien, en particulier un drone (210), avec un dispositif de détection (100) selon l'une quelconque des revendications précédentes, dans lequel le dispositif de détection (100) est agencé dans un boîtier (212) qui est relié au véhicule terrestre ou véhicule aérien, en particulier est relié de manière amovible.

8. Procédé d'analyse à distance de substances, en particulier de substances dangereuses, avec un dispositif de détection (100) selon l'une quelconque des revendications 1 à 6, comprenant au moins les étapes suivantes

    (i) l'émission de lumière laser (60) pulsée sur un échantillon (16) se trouvant à une distance de détection (d) ;
    (ii) le découplage et la détection d'un premier faisceau de référence (64) dans le premier détecteur (26) ;
    (iii) la collecte et/ou la focalisation de la lumière laser (62) diffusée au niveau de l'échantillon (16) dans le télescope (18) ;
    (iv) le découplage et la détection de lumière laser diffusée élastiquement comme second faisceau de référence (66) dans le second détecteur (30) ;
    (v) la détermination de la distance de détection (d) en temps réel à partir d'une différence de temps entre des pulsations du premier faisceau de référence (64) et des pulsations du second faisceau de référence (66) ;
    (vi) la transmission de la lumière laser (62) diffusée au spectromètre optique (22) ;
    (vii) la réalisation d'une analyse spectrale de la lumière laser (62) diffusée au niveau de l'échantillon (16) dans le spectromètre (22) ;
    (viii) la classification de la lumière laser analysée, en particulier la classification de la lumière laser (62) analysée selon des classes de substance,

dans lequel le moment de l'arrivée de la lumière laser (62) diffusée élastiquement sur le second détecteur (30) sert en même temps de déclencheur variable pour le démarrage de l'analyse spectrale dans le spectromètre (22).

9. Procédé selon la revendication 8, **caractérisé par** les autres étapes entre l'étape (v) et (vi) :

    (v.1) la réalisation d'un étalonnage de puissance de la lumière laser (60) pulsée ;
    (v.2) dans le cas où la lumière laser (60) pulsée comporte plusieurs longueurs d'onde laser, la réalisation d'un étalonnage d'intensité de la lumière laser (60) pulsée.

10. Procédé selon la revendication 8 ou 9, **caractérisé en ce que** de la lumière laser diffusée élastiquement qui est séparée par le biais du deuxième miroir de découplage (40) comme diviseur de faisceau, en particulier comme diffuseur de faisceau dichroïque, de la lumière Raman et lumière de fluorescence diffusée de manière non élastique, est découplée comme second faisceau de référence (66) dans le second détecteur (30).

11. Procédé selon l'une quelconque des revendications 8 à 10, **caractérisé en ce que** pour la réalisation de l'analyse spectrale, la lumière laser (62) diffusée est filtrée au moyen d'un filtre à bande étroite, en particulier d'un filtre de Notch, et/ou une plage de longueur d'onde est sélectionnée au moyen d'un filtre ajustable, en particulier d'un filtre ajustable à bande étroite.

12. Procédé selon l'une quelconque des revendications 8 à 11, **caractérisé en ce que** le premier faisceau de référence (64) est filtré et/ou focalisé avant le premier détecteur (26) par le biais d'une première optique d'adaptation (24), en particulier avec un filtre de passe-bande et/ou que le second faisceau de référence (66) est filtré et/ou focalisé avant le second détecteur (30) par le biais d'une seconde optique d'adaptation (30), en particulier avec un filtre de passe-bande.

13. Procédé selon l'une quelconque des revendications 8 à 12, **caractérisé en ce que** des signaux perturbateurs sont éliminés dans la lumière laser (62) diffusée dans le spectromètre (18), en particulier dans une unité de mesure (48), avec une moyenne de Boxcar de valeurs de mesure.

14. Procédé selon l'une quelconque des revendications 8 à 13, **caractérisé en ce qu'**une divergence et/ou un diamètre du faisceau laser (60) est réglé avant un découplage sur l'échantillon (16) par le biais d'un troisième miroir de découplage (14) au moyen d'une unité d'adaptation de faisceau (12).

15. Procédé selon l'une quelconque des revendications 8 à 14, **caractérisé en ce qu'**une plage de longueur d'onde de la lumière laser (62) diffusée est sélectionnée dans le trajet de faisceau après le télescope (18) au moyen d'une unité d'adaptation de faisceau (20), en particulier avec une unité de filtre (54), en particulier

qu'une focalisation de la lumière laser (62) diffusée dans le trajet de faisceau est commandée par le télescope (18) sur l'unité d'adaptation de faisceau (20) avec une unité d'autofocalisation (42), en particulier par le biais de la détermination de la distance de détection (d), en particulier que l'unité de mesure (48), et/ou le module de filtre (54), et/ou l'unité d'autofocalisation (42) sont commandés dans une unité de référence (46) pour le traitement de signaux du premier et du second détecteur (26, 30).

16. Procédé selon l'une quelconque des revendications 8 à 15, **caractérisé en ce qu'**un démarrage d'une analyse à distance d'un échantillon (16), en particulier un envoi de pulsations laser (60) individuelles, est commandée au moyen d'un dispositif de commande (44), en particulier après la saisie sur un ordinateur (50).

17. Produit de programme informatique comprenant des ordres qui amènent celui-ci lors de la réalisation du programme par un ordinateur (50), à réaliser le procédé selon l'une quelconque des revendications 8 à 16, dans lequel l'ordinateur (50) sert à la commande d'un dispositif de détection (100) selon l'une quelconque des revendications 1 à 6.

Fig. 1

Fig. 2

Fig. 3

Fig. 4

Fig. 5

Fig. 6

EP 4 028 793 B1

Fig. 7

Fig. 8

S100

S102

S104

S106

S108

S110

S112

S114

Fig. 9

200

210

100

212

d

60, 62

16

Fig. 10

**IN DER BESCHREIBUNG AUFGEFÜHRTE DOKUMENTE**

**In der Beschreibung aufgeführte Patentdokumente**

- DE 102016121517 A1
- US 20160334507 A1

**In der Beschreibung aufgeführte Nicht-Patentliteratur**

- Laser radar signal processing for measurement of chemical and biological agents. **SUDHAKAR P. et al.** 2017, 4th International Conference on Advanced Computing and Communication Systems (ICACCS). IEEE, 06. Januar 2017, 1-6